(19) **Europäisches Patentamt / European Patent Office / Office européen des brevets**

(11) **EP 4 132 054 B1**

(12) **EUROPEAN PATENT SPECIFICATION**

(45) Date of publication and mention
of the grant of the patent:
**20.11.2024 Bulletin 2024/47**

(21) Application number: **21774511.6**

(22) Date of filing: **03.03.2021**

(51) International Patent Classification (IPC):
**H04W 16/14** *(2009.01)*  **H04W 52/16** *(2009.01)*
**H04W 52/24** *(2009.01)*  **H04W 52/36** *(2009.01)*
**H04W 72/566** *(2023.01)*

(52) Cooperative Patent Classification (CPC):
**H04W 52/367; H04W 16/14; H04W 52/16;
H04W 52/241;** H04W 72/566

(86) International application number:
**PCT/JP2021/008214**

(87) International publication number:
**WO 2021/192869 (30.09.2021 Gazette 2021/39)**

(54) **COMMUNICATION CONTROL DEVICE, COMMUNICATION CONTROL METHOD,
COMMUNICATION DEVICE, AND COMMUNICATION METHOD**

KOMMUNIKATIONSSTEUERUNGSVORRICHTUNG,
KOMMUNIKATIONSSTEUERUNGSVERFAHREN, KOMMUNIKATIONSVORRICHTUNG UND
KOMMUNIKATIONSVERFAHREN

DISPOSITIF DE COMMANDE DE COMMUNICATION, PROCÉDÉ DE COMMANDE DE
COMMUNICATION, DISPOSITIF DE COMMUNICATION ET PROCÉDÉ DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2020 JP 2020058924**

(43) Date of publication of application:
**08.02.2023 Bulletin 2023/06**

(73) Proprietor: **Sony Group Corporation
Tokyo 108-0075 (JP)**

(72) Inventor: **FURUICHI, Sho
Tokyo 108-0075 (JP)**

(74) Representative: **Witte, Weller & Partner
Patentanwälte mbB
Postfach 10 54 62
70047 Stuttgart (DE)**

(56) References cited:
**EP-A1- 3 780 692**  **WO-A1-2019/187507**
**WO-A1-2019/187507**  **JP-A- 2013 526 126**
**JP-A- 2016 213 672**  **US-A1- 2019 364 565**

- **PRAKASH MOORUT ET AL.: "Signaling
Protocols and Procedures for Citizens
Broadband Radio Service (CBRS): Spectrum
Access System (SAS) -Citizens Broadband Radio
Service Device (CBSD) Interface Technical
Specification Spectrum Sharing Committee Work
Group 3 (CBRS Protocols) SAS-CBSD TS
WINNF-TS-0016-V1.2.4 TERMS, CONDITIONS &",**
26 June 2019 (2019-06-26), pages 1 - 60,
XP055718518, Retrieved from the Internet
<URL:https://winnf.memberclicks.net/assets/wo
rk_products/Specifications/WINNF-TS-0016-V1.
2.4%20SAS%20to%20CBSD%20Technical%20S
pecification.pdf> [retrieved on 20200728]

**Description**

TECHNICAL FIELD

The present disclosure relates to a communication control device, a communication control method, a communication device, and a communication method.

BACKGROUND ART

Due to an increase in a wireless environment in which various wireless systems are mixed, and enrichment of content provided via radio, a problem of exhaustion of radio wave resources (for example, frequencies) that can be allocated to wireless systems is coming to the surface. Therefore, as a means for squeezing necessary radio wave resources, "dynamic frequency sharing (dynamic spectrum access (DSA))" that makes good use of temporal and spatial emptiness (white spaces) among frequency bands that have been allocated to specific wireless systems is rapidly attracting attention.

CITATION LIST

NON-PATENT DOCUMENT

Non-Patent Document 1: WINNF-SSC-0004-V14.0.0 Spectrum Sharing Committee CBRS Release Plan [available at https://cbrs.wirelessinnovation.org/policies-and-procedures]
Non-Patent Document 2: Electronic Code of Federal Regulations, Title 47, Chapter I, Subchapter D, Part 96 Citizens Broadband Radio Service [available at https://www.ecfr.gov/cgi-bin/text-idx?node=pt47.5.96]
Non-Patent Document 3: Electronic Code of Federal Regulations, Title 47, Chapter I, Subchapter A, Part 1, Subpart X Spectrum Leasing [available at https://www.ecfr.gov/cgi-bin/text-idx?node=sp47.1.1.x]
Non-Patent Document 4: WINNF-TS-0061-V1.5.1 Test and Certification for Citizens Broadband Radio Service (CBRS); Conformance and Performance Test Technical Specification; SAS as Unit Under Test (UUT) [available at https://cbrs.wirelessinnovation.org/release-1-of-the-baseline-standard-specifications]
Non-Patent Document 5: WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification [available at https://cbrs.wirelessinnovation.org/release-1-of-the-baseline-standard-specifications]

Further prior art is WO2019187507 A1 and US2019364565 A1.

SUMMARY OF THE INVENTION

PROBLEMS TO BE SOLVED BY THE INVENTION

As a frequency sharing standard of a 3550 to 3700 MHz band in the United States, known is a group of standards referred to as Citizens Broadband Radio Service (CBRS) Baseline Standards of the Wireless Innovation Forum (WInnForum) Spectrum Sharing Committee (SSC).
Among this group of standards, WINNF-TS-0016 defines a signaling protocol between a spectrum access system (SAS) that is a frequency management server, a citizens broadband radio service device (CBSD) that is a base station and a proxy system, and a domain proxy (DP). By following this protocol, a CBSD can perform radio wave utilization on a priority of a Priority Access (PA) or a General Authorized Access (GAA) basis.
Permission and authorization related to the radio wave utilization are performed by a SAS. For the permission and authorization, a SAS examines a set of the maximum allowable equivalent isotropic radiated power (EIRP) and a frequency channel (a frequency band between an upper limit frequency and a lower limit frequency) requested from a CBSD, and authenticates the requested maximum allowable EIRP and frequency channel as a grant. At the time of the authentication with the grant by the SAS, the CBSD is notified of a priority of either a PA or a GAA from the SAS. Radio wave utilization of the CBSD based on the grant is managed by a procedure referred to as a heartbeat between the SAS and the CBSD.
Here, there is a constraint that "parameters of the grant cannot be changed, and in a case where the parameters are changed, it is necessary to apply for a grant again". This constraint may become a problem in the future. As an assumable situation, a conceivable case is that in a case where there occurs the necessity of stopping radio wave transmission through a frequency channel associated with a PAL grant, it is desired to newly obtain a grant for a backup channel of the PAL. Although in the current mechanism, a grant itself can be immediately issued by a SAS, actual radio wave transmission based on the grant can be performed after processing referred to as Coordinated Periodic Activities among SASs (CPAS) performed among a plurality of SASs once in 24 hours is completed. In the CPAS, calculation and the like related to higher-tier protection are executed. Since the United States Federal Communications Commissions (FCC) Rules specify that the continuation of service for all registered CBSDs must be ensured, it is desirable to avoid interruption of radio wave transmission as much as possible.

The present disclosure provides a communication control device, a communication control method, a communication device, and a communication method that can change a frequency band to be utilized to another frequency band without the necessity of newly getting a permission for utilization of the frequency band again.

SOLUTIONS TO PROBLEMS

The invention is defined in independent claims 1 and 11-13. Further features are defined in dependent claims.

A communication control device according to the present disclosure includes:

a first transmission unit that transmits recommendation information that recommends a second frequency band as a change destination of a first frequency band utilized by a communication device permitted with a permission identifier to utilize the first frequency band;

a reception unit that receives request information that requests a change in a frequency band utilization of which is permitted with the permission identifier from the first frequency band to the second frequency band; and

a second transmission unit that in a case where the request information includes the permission identifier, transmits permission information that permits a change in the frequency band utilization of which is permitted with the permission identifier from the first frequency band to the second frequency band.

The first transmission unit may transmit the recommendation information in a case where a specific condition regarding the first frequency band is satisfied.

The first transmission unit may transmit the recommendation information in a case where utilization of the first frequency band by a system that can preferentially utilize the first frequency band is detected as the specific condition.

The first transmission unit may transmit the recommendation information in a case where the permission identifier of the communication device is included in a list that stores a permission identifier for which radio wave transmission is stopped in a case where utilization of the first frequency band by the system is detected.

The recommendation information may include information about transmission power used in the second frequency band.

The reception unit may receive a frequency utilization notification regarding the first frequency band from the communication device at regular intervals, and

the first transmission unit may transmit a response including the recommendation information to the communication device in response to the frequency utilization notification.

The second frequency band may be a frequency band for backup of the first frequency band.

In a case where the specific condition is no longer satisfied, the second transmission unit may transmit instruction information that returns the frequency band utilization of which is permitted with the permission identifier to the first frequency band.

The communication control device may further include a processing unit that reckons transmission power at which an interference amount in the second frequency band does not exceed the interference margin, in which

the recommendation information may include information that designates the reckoned transmission power as transmission power to be used in the second frequency band.

The recommendation information may cause transmission power same as the transmission power used by the communication device in the first frequency band to be transmission power to be used in the second frequency band.

A communication control method according to the present disclosure includes:

transmitting recommendation information that recommends a second frequency band as a change destination of a first frequency band utilized by a communication device permitted with a permission identifier to utilize the first frequency band;

receiving request information that requests a change in a frequency band utilization of which is permitted with the permission identifier from the first frequency band to the second frequency band; and

in a case where the request information includes the permission identifier, transmitting permission information that permits a change in the frequency band utilization of which is permitted with the permission identifier from the first frequency band to the second frequency band.

A communication device according to the present disclosure includes:

a reception unit that receives recommendation information that recommends a second frequency band as a change destination of a first frequency band utilized by the communication device permitted with a permission identifier to utilize the first frequency band;

a transmission unit that in a case where the recommendation information is received, transmits request information that includes the permission identifier and requests a change in a frequency band utilization of which is permitted with the permission identifier from the first frequency band to the second frequency band; and

a second reception unit that receives permission information that permits a change in the frequency band utilization of which is permitted with the permission identifier from the first frequency band to the second frequency band.

A communication method according to the present disclosure is executed by a communication device permitted with a permission identifier to utilize a first frequency band, and includes:

receiving recommendation information that recommends a second frequency band as a change destination of the first frequency band;

in a case where the recommendation information is received, transmitting request information that includes the permission identifier and requests a change in a frequency band utilization of which is permitted with the permission identifier from the first frequency band to the second frequency band; and

receiving permission information that permits a change in the frequency band utilization of which is permitted with the permission identifier from the first frequency band to the second frequency band.

BRIEF DESCRIPTION OF DRAWINGS

Fig. 1 is a diagram illustrating a system model according to an exemplary embodiment of the present disclosure.

Fig. 2 is a diagram illustrating a network configuration to which autonomous decision-making may be applied.

Fig. 3 is a diagram illustrating a network configuration to which centralized decision-making may be applied.

Fig. 4 is a diagram illustrating a network configuration in a case where both centralized decision-making and distributed decision-making are applied.

Fig. 5 is a diagram illustrating a three-tier structure in Citizens Broadband Radio Service (CBRS).

Fig. 6 is a diagram illustrating a flow of signaling between terminals.

Fig. 7 is a block diagram of a communication system according to an exemplary embodiment of the present disclosure.

Fig. 8 is an operation sequence diagram performed between a communication device and a communication control device.

Fig. 9 is a flowchart illustrating an example of operation of the communication control device according to an exemplary embodiment of the present disclosure. Fig. 10 is a flowchart illustrating another example of operation of the communication device according to an exemplary embodiment of the present disclosure. Fig. 11 is a diagram illustrating an example of a grant state machine according to a comparative example.

Fig. 12 is a diagram illustrating an example of a grant state machine according to an exemplary embodiment of the present disclosure.

MODE FOR CARRYING OUT THE INVENTION

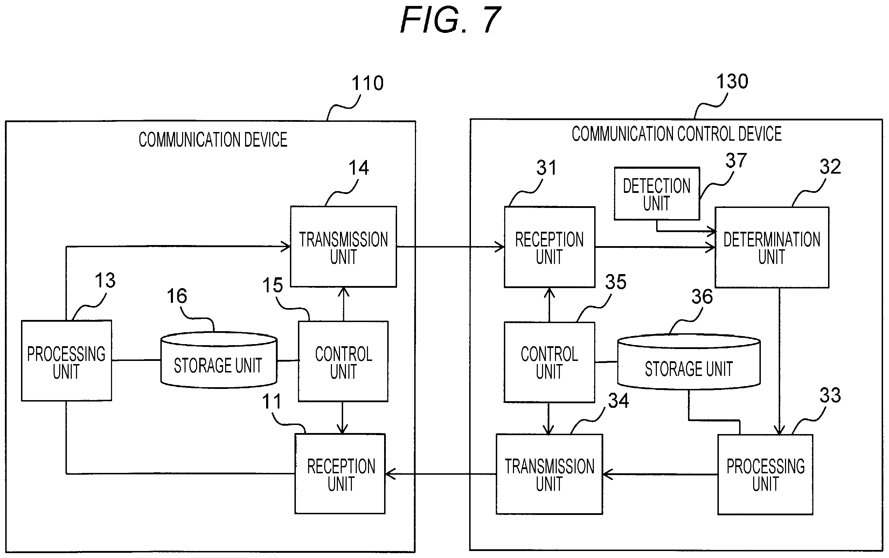

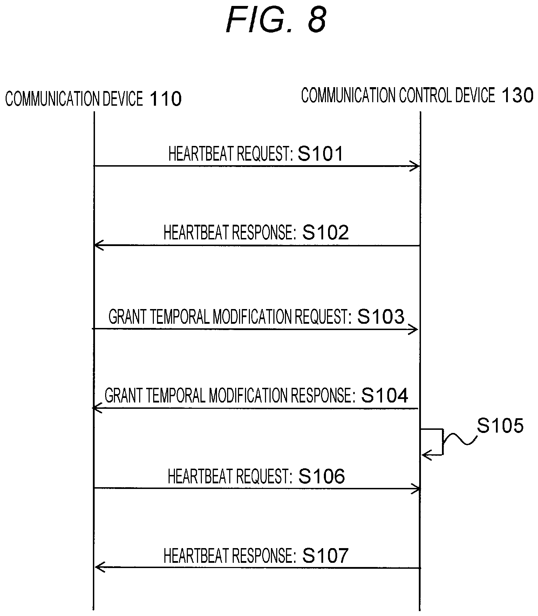

In the following, fig. 7 together with fig. 8 and their descriptions are according to the invention as defined in the claims. The rest of the following description and figures does not or does not fully and thus only partly correspond to the invention as defined in the claims, and is therefore either not falling within the subject-matter for which protection is sought, or is not encompassed by the wording of the claims but is considered as useful for understanding the invention.
Hereinafter, exemplary embodiments of the present disclosure will be described with reference to the drawings. In one or more exemplary embodiments shown in the present disclosure, the elements included in each exemplary embodiment can be combined with each other, and the combined result also forms part of the exemplary embodiment(s) shown in the present disclosure.

«1. Assumable Representative Scenario»

<1.1 System Model>

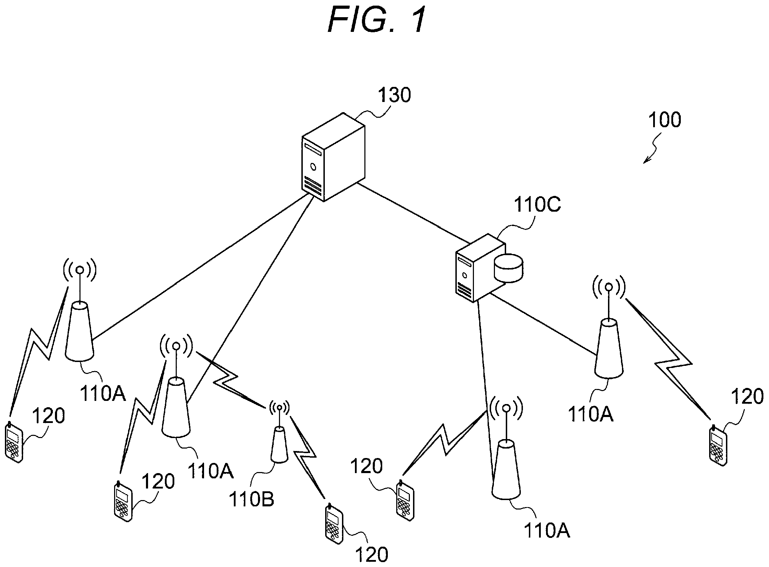

Fig. 1 illustrates a system model according to an exemplary embodiment of the present invention. As illustrated in Fig. 1, the present system model is represented by a communication network 100 including wireless communication, and typically is constituted by the following entities.

- Communication devices 110
- Terminals 120
- A communication control device 130

Furthermore, the present system model also includes at least a primary system and a secondary system utilizing the communication network 100. The primary system and the secondary system are constituted by the communication devices 110 or are constituted by the communication devices 110 and the terminals 120. Although various communication systems can be treated as the primary system or the secondary system, it is supposed that in the present exemplary embodiment, the primary system is a wireless system that uses a specific frequency band, and the secondary system is a wireless system that shares part or all of the frequency band. That is, the present system model will be described as a model of a wireless communication system regarding dynamic frequency sharing (dynamic spectrum access (DSA)). Note that the present system model is not limited to a system related to the dynamic frequency sharing.

Typically, the communication device 110 is a wireless device, such as a wireless base station (base station, Node B, eNB, gNB, or the like) or a wireless access point, that provides wireless communication service for the terminals 120. That is, the communication device 110 provides wireless communication service to enable wireless communication of the terminals 120. Furthermore, the communication device 110 may be a wireless relay device or an optical extension device referred to as a remote radio head (RRH). In the following description, unless otherwise noted, the communication devices 110 will be described as entities constituting the secondary system.

The coverage (communication zone) provided by the communication device 110 is allowed to have various sizes from a large size, such as a macrocell, to a small size, such as a picocell. Like a distributed antenna system (DAS), a plurality of the communication devices 110 may form one cell. Furthermore, in a case where the communication device 110 has a beamforming capability, a cell or a service area may be formed for every beam.

It is assumed that in the present disclosure, two different types of the communication devices 110 exist.

In the present disclosure, the communication device 110 that can access the communication control device 130 without utilizing a wireless path that needs permission of the communication control device 130 is referred to as a "communication device 110A". Specifically, for example, the communication device 110 capable of wired Internet connection can be regarded as the "communication device 110A". Furthermore, for example, even a wireless relay device that does not have a wired Internet connection function may also be regarded as the "communication device 110A" if a wireless backhaul link using a frequency that does not need permission of the communication control device 130 is constructed between the wireless relay device and another communication device 110A.

In the present disclosure, the communication device 110 that cannot access the communication control device 130 without a wireless path that needs permission of the communication control device 130 is referred to as a "communication device 110B". For example, a wireless relay device that needs to construct a backhaul link using a frequency that needs permission of the communication control device 130 can be regarded as the "communication device 110B". Furthermore, for example, a device, such as a smartphone furnished with a wireless network provision function represented by tethering, that uses a frequency that needs permission of the communication control device 130 in both a backhaul link and an access link may also be treated as the "communication device 110B".

The communication device 110 does not necessarily need to be fixedly installed. For example, the communication device 110 may be installed in a moving object, such as an automobile. Furthermore, the communication device 110 does not necessarily need to exist on the ground. For example, an object existing in the air or outer space, such as an aircraft, a drone, a helicopter, a high altitude platform station (HAPS), a balloon, a satellite, or the like, may be furnished with the communication device 110. Furthermore, for example, an object existing on the sea or under the sea, such as a ship, a submarine, or the like, may be furnished with the communication device 110. Typically, such a mobile communication device 110 corresponds to the communication device 110B, and performs wireless communication with the communication device 110A to secure an access path to the communication control device 130. As a matter of course, even a mobile communication device 110 can be treated as the communication device 110A as long as a frequency used in wireless communication with the communication device 110A is out of a management target of the communication control device 130.

In the present disclosure, unless otherwise specified, the description "communication device 110" includes both meanings of the communication device 110A and the communication device 110B, and may be substituted and read as either one.

The communication devices 110 may be utilized, operated, or managed by various operators. For example, a mobile network operator (MNO), a mobile virtual network operator (MVNO), a mobile network enabler (MNE), a mobile virtual network enabler (MVNE), a shared equipment operator, a neutral host network (NHN) operator, a broadcasting operator, an enterprise, an educational institution (an educational corporation, a board of education of each self-governing body, or the like), a real estate (a building, an apartment, or the like) manager, an individual, or the like may be assumed as an operator related to the communication devices 110. Note that an operator related to the communication devices 110 is not particularly limited. Furthermore, the communication devices 110A may be a shared equipment utilized by a plurality of operators. Furthermore, different operators may perform installation and utilization, operation, and management of the equipment, respectively.

The communication devices 110 operated by an operator are typically connected to the Internet via a core network. Furthermore, operation, management, and maintenance are performed by a function referred to as Operation, Administration & Maintenance (OA & M). Furthermore, for example, as illustrated in Fig. 1, an intermediate device (network manager) 110C may exist to synthetically control the communication devices 110 in a network. Note that the intermediate device may be the communication device 110 or may be the communication control device 130.

The terminals 120 (user equipment, user terminals, user stations, mobile terminals, mobile stations, or the like) are devices that perform wireless communication by wireless communication service provided by the communication devices 110. Typically, communication apparatuses, such as smartphones, correspond to the terminals 120. Note that a device furnished with a wireless communication function may correspond to the terminal 120. For example, an apparatus, such as a business camera having a wireless communication function, may also correspond to the terminal 120 even if the wireless communication is not a main application. Furthermore, a communication apparatus that transmits data to the terminal 120, such as a broadcasting wireless station (field pickup unit (FPU)) that transmits images and the like for television broadcasting from outside a broadcasting station (spot) to the broadcasting station in order to perform sports relay, also corresponds to the terminal 120. Furthermore, the terminal 120 does not necessarily need to be utilized by a person. For example, like what is called machine type communication (MTC), an apparatus, such as a factory machine or a sensor installed in a building, may be network-connected to operate as the terminal 120. Furthermore, an apparatus referred to as customer premises equipment (CPE) provided to secure Internet connection may behave as the terminal 120.

Furthermore, as represented by device-to-device (D2D) and vehicle-to-everything (V2X), the terminal 120 may be furnished with a relay communication function.

Furthermore, similarly to the communication device 110, the terminal 120 does not need to be fixedly installed or exist on the ground. For example, an object existing in the air or outer space, such as an aircraft, a drone, a helicopter, a satellite, or the like, may operate as the terminal 120. Furthermore, for example, an object existing on the sea or under the sea, such as a ship, a submarine, or the like, may operate as the terminal 120.

In the present disclosure, unless otherwise noted, the terminal 120 corresponds to an entity that terminates a wireless link using a frequency that needs permission of the communication control device 130. However, depending on a function with which the terminal 120 is furnished or an applied network topology, the terminal 120 may perform an operation equivalent to the operation of the communication device 110. In other words, depending on a network topology, a device that may correspond to the communication device 110, such as a wireless access point, may correspond to the terminal 120, or a device that may correspond to the terminal 120, such as a smartphone, may correspond to the communication device 110.

The communication control device 130 is typically a device that performs determination, utilization permission, instructions, and/or management of communication parameters of the communication device 110. For example, a database server referred to as a television (TV) white space database (TVWSDB), a geolocation database (GLDB), a spectrum access system (SAS), or automated frequency coordination (AFC) corresponds to the communication control device 130. Furthermore, for example, a control device that performs radio wave interference control between devices, and is specified by standards represented by EN 303 387 of European Telecommunications Standards Institute (ETSI), the Institute of Electrical and Electronics Engineers (IEEE) 802.19.1-2018, CBRSA-TS-2001, or the like also corresponds to the communication control device 130. Furthermore, for example, a registered location secure server (RLSS) specified in IEEE 802.11-2016 also corresponds to the communication control device 130. That is, these examples are not limiting, and an entity responsible for determination, utilization permission, instructions, management, and the like of communication parameters of the communication device 110 may be referred to as the communication control device 130. Basically, the control targets of the communication control device 130 are the communication devices 110, but the communication control device 130 may control the terminals 120 under the control of the communication devices 110.

A plurality of the communication control devices 130 may exist. In a case where a plurality of the communication control devices 130 exists, at least one of at least the following three types of decision-making topologies may be applied to the communication control devices 130.

- Autonomous decision-making
- Centralized decision-making
- Distributed decision-making

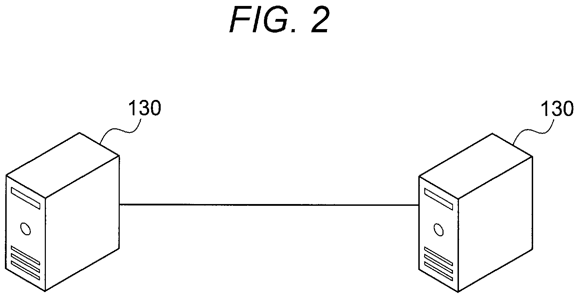

The autonomous decision-making is a decision-making topology in which an entity that makes a decision (decision-making entity, here, the communication control device 130) makes a decision independently from another decision-making entity. The communication control device 130 independently performs necessary frequency allocation and interference control calculation. For example, in a case where a plurality of the communication control devices 130 is arranged in a distributed manner as illustrated in Fig. 2, the autonomous decision-making may be applied.

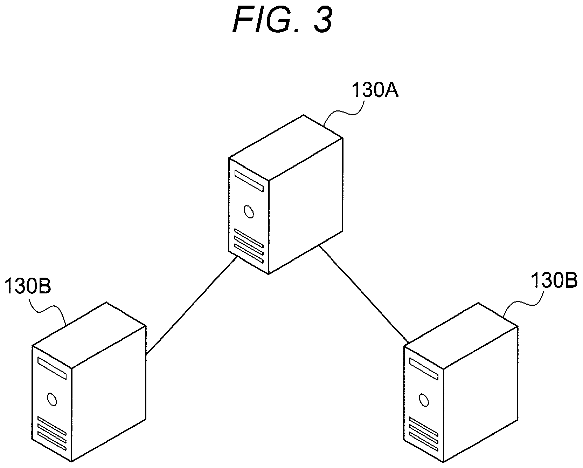

The centralized decision-making is a decision-making topology in which a decision-making entity entrusts decision making to another decision-making entity. In a case where the centralized decision-making is performed, a model as in Fig. 3 is assumed, for example. Fig. 3 illustrates a model (what is called a master/slave type) in which one communication control device 130 centrally unifies a plurality of communication control devices 130. In the model in Fig. 3, a communication control device 130A, which is a master, can unify communication control devices 130B, which are a plurality of slaves, to make decisions in a centralized manner.

The distributed decision-making is a decision-making topology in which a decision-making entity makes a decision in liaison with another decision-making entity. For example, mutual adjustment, negotiation, and the like of decision-making results performed by each of a plurality of the communication control devices 130 after the communication control devices 130 independently make decisions as in the autonomous decision-making in Fig. 2 may correspond to the "distributed decision-making". Furthermore, it can also be regarded as the "distributed decision-making" that for example, in the centralized decision-making in Fig. 3, the communication control device 130A as a master dynamically performs delegation, discard, or the like of a decision-making authority for each of the communication control devices 130B as slaves for the purpose of load balancing or the like.

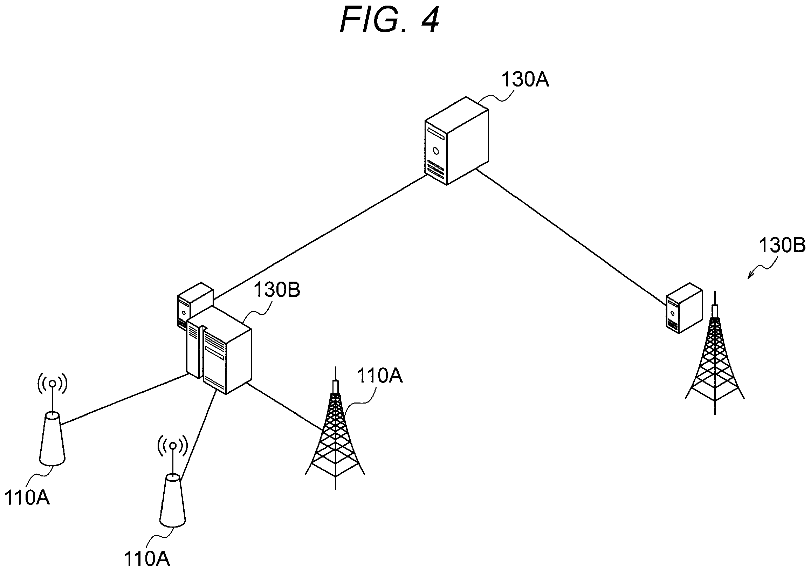

Both the centralized decision-making and the distributed decision-making may be applied. In Fig. 4, a communication control device 130B as a slave operates as an intermediate device that puts a plurality of communication devices 110 together. A communication control device 130A as a master may not control the communication devices 110 put together by the communication control device 130B as a slave, that is, a secondary system constituted by the communication control device 130B as a slave. As described above, implementation as illustrated in Fig. 4 is also possible as a modification.

For a role of the communication control device 130, the communication control device 130 may also acquire necessary information from other entities than the communication devices 110 and the terminals 120 of the communication network 100. Specifically, for example, information necessary for protecting the primary system may be acquired from a database (regulatory database) managed or operated by a radio wave administrative agency (national regulatory authority (NRA)) of a country or a region. One example of the regulatory database is Universal Licensing System (ULS) operated by the United States Federal Communications Commissions (FCC), or the like. Examples of information necessary for protecting the primary system include, for example, primary system position information, primary system communication parameters, an out-of-band emission (OOBE) limit, an adjacent channel leakage ratio (ACLR), an adjacent channel selectivity, a fade margin, a protection ratio (PR), and the like. In a region where fixed numerical values, acquisition methods, derivation methods, and the like are defined by a legal system or the like in order to protect the primary system, it is desirable to use information defined by the legal system, as information necessary for protecting the primary system.

Furthermore, a database that records the communication devices 110 and the terminals 120 that have been subjected to conformity approval, such as Equipment Authorization System (EAS) managed by the Office of Engineering and Technology (OET) of the FCC, also corresponds to the regulatory database. From such a regulatory database, information regarding operable frequencies of the communication devices 110 and the terminals 120, information regarding the maximum equivalent isotropic radiated power (EIRP), and the like can be acquired. Naturally, the communication control device 130 may use these pieces of information to protect the primary system.

Furthermore, it is also assumable that the communication control device 130 acquires radio wave sensing information from a radio wave sensing system installed and operated for the purpose of detection of radio wave of the primary system. As a specific example, in Citizens Broadband Radio Service (CBRS) of the United States, the communication control device 130 acquires radio wave detection information about a marine radar as the primary system from a radio wave sensing system referred to as Environmental Sensing Capability (ESC). Furthermore, in a case where the communication device 110 and the terminal 120 are furnished with sensing functions, the communication control device 130 may acquire radio wave detection information about the primary system from the communication device 110 and the terminal 120.

The interface between each of the entities constituting the present system model may be either wired or wireless. For example, not only a wired line but also a wireless interface that does not depend on frequency sharing may be utilized as an interface between the communication control device 130 and the communication device 110. As examples of the wireless interface that does not depend on frequency sharing, a wireless communication line provided by a mobile network operator via a licensed band, Wi-Fi communication utilizing an incumbent license-exempt band, and the like exist.

<1.2 Terms regarding Frequency and Sharing>

As described above, the present exemplary embodiment will be described assuming a dynamic frequency sharing (dynamic spectrum access) environment. As a representative example of the dynamic frequency sharing, a mechanism defined in the CBRS of the United States (that is, a mechanism defined in Part 96 of the FCC Rules of the United States, Citizens Broadband Radio Service) will be described.

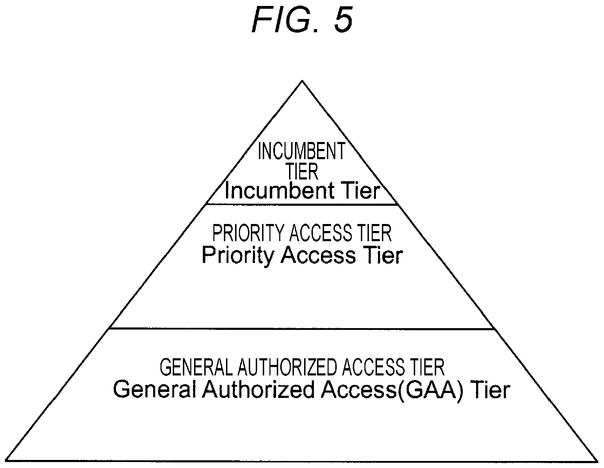

In the CBRS, as illustrated in Fig. 5, each of shared frequency band users is classified into one of three groups. This group is referred to as a tier. The three groups are referred to as an Incumbent Tier, a Priority Access Tier, and a General Authorized Access (GAA) Tier, respectively.

The Incumbent Tier is a group including incumbent users who conventionally utilize a frequency band defined as the shared frequency band. The incumbent users are also generally referred to as primary users. In the CBRS, the Department of Defense (DOD) of the United States, fixed satellite operators, and a new rule application excepted wireless broadband licensee (Grandfathered Wireless Broadband Licensee (GWBL)) are defined as the incumbent users. The Incumbent Tier is not requested to avoid interference with the Priority Access Tier and the GAA tier having lower priorities or to restrict utilization of the shared frequency band. Furthermore, the Incumbent Tier is protected from the interference by the Priority Access Tier and the GAA Tier. That is, the users of the Incumbent Tier can use the shared frequency band without considering the existence of the other groups.

The Priority Access Tier is a group of users who utilize the shared frequency band on the basis of the above-described Priority Access License (PAL). A user of the Priority Access Tier is also generally referred to as a secondary user. When utilizing the shared frequency band, the Priority Access Tier is requested to avoid interference and to restrict the utilization of the shared frequency band, for the Incumbent Tier having a priority higher than the priority of the Priority Access Tier. On the other hand, the Priority Access Tier is not requested to avoid interference and to restrict the utilization of the shared frequency band, for the GAA Tier having a priority lower than the priority of the Priority Access Tier. Furthermore, the Priority Access Tier is not protected from the interference by the Incumbent Tier having a higher priority, but is protected from the interference by the GAA Tier having a lower priority.

The GAA Tier is a group including shared frequency band users who do not belong to the Incumbent Tier and the Priority Access Tier. Similarly to the Priority Access Tier, a GAA Tier user is also generally referred to as a secondary user. However, since the shared utilization priority is lower than the shared utilization priority of the Priority Access Tier, the GAA Tier is also referred to as a low-priority secondary user. When utilizing the shared frequency band, the GAA Tier is requested to avoid interference and to restrict the utilization of the shared frequency band, for the Incumbent Tier and the Priority Access Tier having higher priorities. Furthermore, the GAA Tier is not protected from the interference by the Incumbent Tier and the Priority Access Tier having higher priorities. That is, regarding the legal system, the GAA Tier is a tier from which an opportunistic shared frequency band utilization is requested.

Although the CBRS mechanism has been described above as a representative example of the dynamic frequency sharing, the present exemplary embodiment is not limited to the definition of the CBRS. For example, as illustrated in Fig. 5, the CBRS generally adopts a three-tier structure, but a two-tier structure may be adopted in the present exemplary embodiment. Representative examples of the two-tier structure include Authorized Shared Access (ASA), Licensed Shared Access (LSA), evolved LSA (eLSA), TV band White Space (TVWS) and the like. In the ASA, the LSA, and the eLSA, there is no GAA tier, and a structure equivalent to a combination of the Incumbent Tier and the Priority Access Tier is adopted. Furthermore, in the TVWS, there is no Priority Access Tier, and a structure equivalent to a combination of the Incumbent Tier and the GAA Tier is adopted. Furthermore, four or more Tiers may exist. Specifically, for example, four or more Tiers may be generated by providing a plurality of intermediate tiers corresponding to the Priority Access Tier, giving different priorities to each of the intermediate tiers, and the like. Furthermore, for example, the Tiers may be increased by similarly dividing the GAA Tier, giving priorities, and the like. That is, each of the groups may be divided.

Furthermore, the primary system of the present exemplary embodiment is not limited to the definition of the CBRS. For example, as examples of the primary system, wireless systems, such as TV broadcasting, a fixed microwave line (fixed system (FS)), a weather radar (meteorological radar), a radio altimeter, a wireless train control system (communications-based train control), and radio astronomy, are assumed. Furthermore, the examples are not limiting, and any wireless system may be the primary system of the present exemplary embodiment.

Furthermore, as described above, the present exemplary embodiment is not limited to a frequency sharing environment. In general, in frequency sharing or secondary frequency utilization, an incumbent system that utilizes a target frequency band is referred to as a primary system, and a secondary utilizer is referred to as a secondary system. However, in a case where the present exemplary embodiment is applied to other environments than a frequency sharing environment, the primary system and the secondary system should be replaced with other terms to be read. For example, a macrocell base station in a heterogeneous network (HetNet) may be a primary system, and a small-cell base station or a relay station may be a secondary system. Furthermore, a base station may be a primary system, and a relay user equipment (UE) and a vehicle UE that exist in a coverage of the base station and implement D2D and V2X and may be a secondary system. A base station is not limited to a fixed type, and may be a portable type or a mobile type. In such a case, for example, a core network, a base station, a relay station, a relay UE, or the like may be furnished with the communication control device 130 of the present exemplary embodiment.

Furthermore, in a case where the present exemplary embodiment is applied to other environments than the frequency sharing environment, the term "frequency" in the present disclosure is replaced with another term shared in the application destination. For example, it is assumed that the term "frequency" is replaced with terms, such as "resource", "resource block", "resource element", "resource pool", "channel", "component carrier", "carrier", "subcarrier", and "bandwidth part (BWP)", and other terms having meanings equivalent or similar to the terms.

<<2. Description of Various Procedures Assumed in Present Exemplary Embodiment>>

Here, basic procedures that can be used at the time of the implementation of the present exemplary embodiment will be described. Note that up to <2.5> described later, the description will be made on the assumption that the basic procedures are mainly performed in the communication device 110A.

<2.1 Registration Procedure>

A registration procedure is a procedure for registering information about a wireless system that intends to utilize a shared frequency band. Specifically, the registration procedure is a procedure for registering, in the communication control device 130, device parameters regarding the communication device 110 of the wireless system. Typically, the registration procedure is started by the communication device 110 that represents the wireless system that intends to utilize the shared frequency band notifying the communication control device 130 of a registration request that includes device parameters. Note that, in a case where a plurality of the communication devices 110 belongs to the wireless system that intends to utilizes the shared frequency band, device parameters of each of the plurality of communication devices is included in the registration request. Furthermore, a device that transmits a registration request as a representative of the wireless system may be appropriately defined.

<2.1.1 Details of Required Parameters>

The device parameters refer to, for example, the following information.

- Information regarding the user of the communication device 110 (hereinafter described as utilizer information)
- Information unique to the communication device 110 (hereinafter described as unique information)
- Information regarding the position of the communication device 110 (hereinafter described as position information)
- Information regarding an antenna included by the communication device 110 (hereinafter described as antenna information)
- Information regarding a wireless interface included by the communication device 110 (hereinafter described as wireless interface information)
- Legal information regarding the communication device 110 (hereinafter described as legal information)
- Information regarding the installer of the communication device 110 (hereinafter described as installer information)
- Information regarding the group to which the communication device 110 belongs (hereinafter group information)

The device parameters are not limited to the above. Other Information than these pieces of information may be treated as the device parameters. Note that the device parameters do not need to be transmitted once, and a plurality of portions of the device parameters may be separately transmitted. That is, a plurality of registration requests may be transmitted for one registration procedure. In this manner, a plurality of portions of one procedure or one piece of processing in one procedure may be separately performed. The procedure described below is also similar.

The utilizer information is information related to the utilizer of the communication device 110. For example, a utilizer ID, an account name, a utilizer name, a utilizer contact information, a call sign, and the like may be assumed. The utilizer ID and the account name may be independently generated by the utilizer of the communication device 110 or may be issued by the communication control device 130 in advance. As the call sign, it is desirable to use a call sign issued by an NRA.

The utilizer information may be used, for example, for an application of interference resolution. As a specific example, in a frequency utilization notification procedure described in <2.5> to be described later, even if the communication control device 130 makes a utilization stop determination for a frequency being used by the communication device 110 and gives instructions based on the utilization stop determination, there may be a case where notification of a frequency utilization notification request for the frequency is continuously provided. In this case, the communication control device 130 can suspect a failure of the communication device 110, and contact the utilizer contact information included in the utilizer information to ask the confirmation of the behavior of the communication device 110. This example is not limiting, and in a case where it is determined that the communication device 110 is performing an operation against communication control performed by the communication control device 130, the communication control device 130 can make contact using the utilizer information.

The unique information is information that can specify the communication device 110, product information about the communication device 110, information regarding hardware or software of the communication device 110, and the like.

The information that can specify the communication device 110 may include, for example, the manufacturing number (serial number) of the communication device 110, the ID of the communication device 110, and the like. The ID of the communication device 110 may be, for example, independently given by the utilizer of the communication device 110.

The product information about the communication device 110 may include, for example, an approval ID, a product model number, information regarding the manufacturer, and the like. The approval ID is, for example, an ID given from an approval agency in each country or region, such as an FCC ID of the United States, a CE number in Europe, a Technical Registrations Conformity Certificate (Technical Conformity) in Japan, or the like. An ID issued by an industry association or the like on the basis of an independent approval program may also be regarded as the approval ID.

The unique information represented by these examples may be used, for example, in applications of a whitelist or a blacklist. For example, in a case where any piece of information regarding a communication device 110 in operation is included in the blacklist, the communication control device 130 can instruct the communication device 110 in question to stop utilizing the frequency in a frequency utilization notification procedure described in <2.5> described later. Moreover, the communication control device 130 can take a behavior, such as not canceling the utilization stop measure until the communication device 110 in question is cancelled from the blacklist. Furthermore, for example, the communication control device 130 can reject registration of a communication device 110 included in the blacklist. Furthermore, for example, the communication control device 130 can also perform an operation, such as not considering, in an interference calculation of the present disclosure, a communication device 110 corresponding to information included in the blacklist, or considering, in an interference calculation, only communication devices 110 corresponding to information included in the whitelist.

The information regarding hardware of the communication device 110 may include, for example, transmission power class information. For example, in the FCC Code of Federal Regulations (C.F.R.) Part 96 of the United States, two types of classes, Category A and Category B, are specified as the transmission power class information, and the information regarding hardware of the communication device 110 conforming to the specification may include information about which of the two types of classes the communication device 110 belongs to. Furthermore, in Technical Specification (TS) 36.104 and TS 38.104 of the 3rd Generation Partnership Project (3GPP), some classes of eNodeB and gNodeB are specified, and these specifications may also be used.

The transmission power class information may be used, for example, in applications of interference calculation. The interference calculation can be performed using the maximum transmission power specified for every class, as the transmission power of the communication device 110.

The information regarding software of the communication device 110 may include, for example, version information, a build number, and the like regarding an executable program in which processing necessary for interaction with the communication control device 130 is described. Furthermore, version information, a build number, and the like of software for operating as the communication device 110 may also be included.

The position information is typically information that can specify the position of the communication device 110. The position information is, for example, coordinate information acquired by a positioning function represented by the Global Positioning System (GPS), the Beidou, the Quasi-Zenith Satellite System (QZSS), Galileo, and an Assisted Global Positioning System (A-GPS). Typically, information related to latitude, longitude, height above ground/sea level, altitude, and positioning error may be included. Alternatively, the position information may be, for example, position information registered in an information management device managed by a national regulatory authority (NRA) or an agency of the NRA. Alternatively, the position information may be, for example, coordinates of an X axis, a Y axis, and a Z axis with a specific geographical position as an origin. Furthermore, together with such coordinate information, an identifier indicating whether the communication device 110 exists outdoors or indoors may be given.

Furthermore, the position information may be information indicating a zone in which the communication device 110 is located. For example, information indicating a zone defined by an administration, such as a postal code or an address, may be used. Furthermore, for example, a zone may be indicated by a set of three or more geographical coordinates. These pieces of information indicating a zone may be provided together with the coordinate information.

Furthermore, in a case where the communication device 110 is located indoors, information indicating a floor of a building where the communication device 110 is located may also be included in the position information. For example, an identifier indicating the floor number, the overground, or the underground, and the like may be included in the position information. Furthermore, for example, information indicating a further closed indoor space, such as a room number or a room name in a building, may be included in the position information.

Typically, the communication device 110 is desirably furnished with a positioning function. However, the performance of the positioning function may not satisfy a requested precision. Furthermore, even if the performance of the positioning function satisfies a requested precision, position information that satisfies the requested precision may not necessarily be acquired depending on the installation position of the communication device 110. Therefore, a device different from the communication device 110 may be furnished a positioning function, and the communication device 110 may acquire information related to the position from the device. The device having a positioning function may be an available incumbent device, but may be provided by the installer of the communication device 110. In such a case, it is desirable that the position information measured by the installer of the communication device 110 is written in the communication device 110.

The antenna information is typically information indicating the performance, configuration, and the like of an antenna with which the communication device 110 is furnished. Typically, information, such as an antenna installation height, a tilt angle (downtilt), a horizontal orientation (azimuth), a boresight, an antenna peak gain, and an antenna model, may be included.

Furthermore, the antenna information may also include information regarding formable beams. For example, information, such as a beam width, a beam pattern, and an analog or digital beam forming capability, may be included.

Furthermore, the antenna information may also include information regarding the performance and configuration of multiple input multiple output (MIMO) communication. For example, information, such as the number of antenna elements and the maximum number of spatial streams, may be included. Furthermore, codebook information to be used, weight matrix information, and the like may also be included. The weight matrix information includes a unitary matrix, a zero-forcing (ZF) matrix, a minimum mean square error (MMSE) matrix, and the like, which are obtained by singular value decomposition (SVD), eigen value decomposition (EVD), block diagonalization (BD), and the like. Furthermore, in a case where the communication device 110 is furnished with a function that needs nonlinear operations, such as maximum likelihood detection (MLD), information indicating the furnished function may also be included in the antenna information.

Furthermore, the antenna information may also include Zenith of Direction, Departure (ZoD). ZoD is a type of radio wave arrival angle. Note that, instead of being provided in notification from the communication device 110, the ZoD may be estimated from radio waves radiated from the antenna of the communication device 110 and provided in notification by another communication device 110. In this case, the communication device 110 may be a device that operates as a base station or an access point, a device that performs D2D communication, a moving relay base station, or the like. The ZoD may be estimated by a radio wave arrival direction estimation technology, such as multiple signal classification (MUSIC) or estimation of signal propagation via rotation invariance techniques (ESPRIT). Furthermore, the ZoD may be used by the communication control device 130 as measurement information.

The wireless interface information is typically information indicating the wireless interface technology with which the communication device 110 is furnished. For example, identifier information indicating a technology used in the Global System for Mobile Communications (GSM), code-division multiple access 2000 (CDMA2000), the Universal Mobile Telecommunications System (UMTS), Evolved Universal Terrestrial Radio Access (E-UTRA), E-UTRA Narrow Band IoT (NB-IoT), fifth generation New Radio (5G NR), 5G NR NB-IoT, or a further next generation cellular system may be included as the wireless interface information. Furthermore, identifier information indicating a derivative technology conforming to Long Term Evolution (LTE)/5G, such as MulteFire, Long Term Evolution -Unlicensed (LTE-U), or NR-Unlicensed (NR-U), may also be included. Furthermore, identifier information indicating a standard technology, such as a metropolitan area network (MAN), such as Worldwide Interoperability for Microwave Access (WiMAX) or WiMAX2+, or a wireless local area network (LAN) of the IEEE 802.11 series, may also be included. Furthermore, identifier information indicating Extended Global Platform (XGP) or shared XGP (sXGP) may also be possible. Identifier information about a communications technology for Local Power, Wide Area (LPWA) may also be possible. Furthermore, identifier information indicating a proprietary wireless technology may also be included. Furthermore, a version number or a release number of a technology specifications that define these technologies may also be included as the wireless interface information.

Furthermore, the wireless interface information may also include frequency band information supported by the communication device 110. For example, the frequency band information may be represented by an upper limit frequency, a lower limit frequency, a center frequency, a bandwidth, a 3GPP operating band number, or a combination of at least two of the upper limit frequency, the lower limit frequency, the center frequency, the bandwidth, or the 3GPP operating band number. Furthermore, one or more pieces of frequency band information may be included in the wireless interface information.

The frequency band information supported by the communication device 110 may further include information indicating capability of a band extension technology, such as carrier aggregation (CA) or channel bonding. For example, combinable band information or the like may be included. Furthermore, as to the carrier aggregation, information regarding a band to be utilized as a primary component carrier (PCC) or a secondary component carrier (SCC) may also be included. Furthermore, the number of component carriers (the number of CCs) that can be aggregated at the same time may also be included.

The frequency band information supported by the communication device 110 may further include information indicating a combination of frequency bands supported by dual connectivity and multi connectivity. In addition, information about another communication device 110 that cooperatively provides the dual connectivity and the multi connectivity may also be provided. In the subsequent procedures, the communication control device 130 may add another communication device 110 having a cooperative relationship or the like to determine the communication control disclosed in the present exemplary embodiment.

The frequency band information supported by the communication device 110 may also include information indicating a radio wave utilization priority, such as a Priority Access License (PAL) and a General Authorized Access (GAA).

Furthermore, the wireless interface information may also include modulation scheme information supported by the communication device 110. For example, as a representative example, information indicating a primary modulation scheme, such as frequency shift keying (FSK), n-value phase shift keying (PSK where n is a multiplier of 2, such as 2, 4, 8), and n-value quadrature amplitude modulation (QAM where n is a multiplier of 4, such as 4, 16, 64, 256, 1024) may be included. Furthermore, information indicating a secondary modulation scheme, such as orthogonal frequency division multiplexing (OFDM), scalable OFDM, discrete Fourier transform spread OFDM (DFT-s-OFDM), generalized frequency division multiplexing (GFDM), or filter bank multi carrier (FBMC), may be included.

Furthermore, the wireless interface information may also include information regarding an error correction code. For example, a capability, such as a turbo code, a low density parity check (LDPC) code, a polar code, or an erasure correction code, and coding rate information to be applied may be included.

The modulation scheme information and the information regarding the error correction code may also be expressed by a modulation and coding scheme (MCS) index as another aspect.

Furthermore, the wireless interface information may also include information indicating a function peculiar to each wireless technology specification supported by the communication device 110. For example, as a representative example, Transmission Mode (TM) information specified in LTE is exemplified. In addition, the one having two or more modes regarding a specific function may also be included in the wireless interface information, such as the TM information. Furthermore, in a case where the communication device 110 supports a function that is not essential in the technology specification even if two or more modes do not exist in the specification, information indicating the supported function may also be included.

Furthermore, the wireless interface information may also include wireless access scheme (radio access technology (RAT)) information supported by the communication device 110. For example, information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like, may be included. Note that TDMA, FDMA, and OFDMA are classified into an orthogonal multiple access scheme (orthogonal multiple access (OMA)). PDMA, CDMA, SCMA, IDMA, and SDMA are classified into a non orthogonal multiple access scheme (non orthogonal multiple access (NOMA)). A representative example of PDMA is a technique implemented by a combination of superposition coding (SPC) and successive interference canceller (SIC). CSMA/CA and CSMA/CD are classified into an opportunistic access scheme (opportunistic access).

In a case where the wireless interface information includes information indicating an opportunistic access scheme, information indicating details of the access scheme may be further included. As a specific example, information indicating either frame based equipment (FBE) or load based equipment (LBE) defined in EN 301 598 of ETSI may be included.

In a case where the wireless interface information indicates the LBE, the wireless interface information may further include information peculiar to the LBE, such as a priority class specified in EN 301 598 of ETSI.

Furthermore, the wireless interface information may also include information related to a duplex mode supported by the communication device 110. As a representative example, for example, information regarding a scheme, such as frequency division duplex (FDD), time division duplex (TDD), or full duplex (FD), may be included.

In a case where TDD is included as the wireless interface information, TDD frame structure information used or supported by the communication device 110 may be given. Furthermore, information related to a duplex mode may be included for every frequency band indicated by the frequency band information.

In a case where FD is included as the wireless interface information, information regarding an interference power sensing level may be included.

Furthermore, the wireless interface information may also include information regarding a transmission diversity technique supported by the communication device 110. For example, space time coding (STC) or the like may be included.

Furthermore, the wireless interface information may also include guard band information. For example, information regarding a guard band size preliminarily defined for the wireless interface may be included. Alternatively, for example, information regarding a guard band size desired by the communication device 110 may be included.

Regardless of the aspects described above, the wireless interface information may be provided for every frequency band.

The legal information is typically information regarding regulations that the communication device 110 must comply with, defined by a radio wave administrative agency or an agency similar to the radio wave administrative agency in each country or region, approval information acquired by the communication device 110, and the like. Typically, the information regarding regulations may include, for example, upper limit value information about out-of-band emission, information regarding blocking characteristics of the receiver, and the like. Typically, the approval information may include, for example, type approval information, law and regulation information serving as the standard of the approval acquisition, and the like. The type approval information corresponds to, for example, an FCC ID of the United States, a Technical Registrations Conformity Certificate of Japan, or the like. The law and regulation information corresponds to, for example, an FCC regulation number of the United States, an ETSI Harmonized Standard number of Europe, or the like.

For the legal information regarding numerical values, numerical values defined in the standards of the wireless interface technology may be substituted. The standards of the wireless interface technology correspond to, for example, 3GPP TS 36.104, TS 38.104, or the like. In 3GPP TS 36.104, TS 38.104, or the like, an Adjacent Channel Leakage Ratio (ACLR) is specified. Instead of the upper limit value information about out-of-band emission, an upper limit value of out-of-band emission may be derived and utilized using an ACLR specified in the standards. Furthermore, the ACLR itself may be used as necessary. Furthermore, an adjacent channel selectivity (ACS) may be used instead of the blocking characteristics. Furthermore, these may be used together, or an adjacent channel interference ratio (ACIR) may be used. Note that in general, an ACIR has the following relationship with an ACLR and an ACS.

[Mathematical Formula 1]

$$ACIR = \left( \frac{1}{ACS} + \frac{1}{ACLR} \right)^{-1} \quad (1)$$

Note that although Expression (1) uses true value expression, Expression (1) may be expressed by logarithmic expression.

The installer information may include information that can specify a person (installer) who has installed the communication device 110, unique information associated with the installer, and the like. Representatively, the installer information may include information regarding a person who is responsible for the position information about the communication device 110, referred to as a Certified Professional Installer (CPI) defined in Non-Patent Document 3. In the CPI, a Certified Professional Installer Registration ID (CPIR-ID) and a CPI name are disclosed. Furthermore, as unique information associated with the CPI, for example, an address for contact (mailing address or contact address), an e-mail address, a telephone number, a public key identifier (PKI), and the like are disclosed. The installer information is not limited to the examples, and other information regarding the installer may be included in the installer information as necessary.

The group information may include information regarding a communication device group to which the communication device 110 belongs. Specifically, for example, information related to a type of group that is the same as or equivalent to a type of group as disclosed in WINNF-SSC-0010 may be included. Furthermore, for example, in a case where a network operator manages communication devices 110 on a group-by-group basis according to an operation policy of the network operator, information regarding the group may be included in the group information.

The information listed so far may be inferred by the communication control device 130 from other information provided from the communication device 110 without the communication device 110 providing the information listed so far to the communication control device 130. Specifically, for example, the guard band information can be inferred from the wireless interface information. In a case where the wireless interface used by the communication device 110 is E-UTRA or 5G NR, the guard band information can be inferred on the basis of the E-UTRA transmission bandwidth specification described in TS36.104 of the 3GPP, the 5G NR transmission bandwidth specification described in TS38.104 of the 3GPP, and tables described in TS38.104 and shown below.

[Table 1]

| Table 5.6-1 Transmission bandwidth configuration NRB in E-UTRA channel bandwidths (quotation from Table 5.6-1 of TS36.104 of the 3GPP) | | | | | | |
|---|---|---|---|---|---|---|
| Channel bandwidth $BW_{Channel}$ [MHz] | 1.4 | 3 | 5 | 10 | 15 | 20 |
| Transmission bandwidth configuration $N_{RB}$ | 6 | 15 | 25 | 50 | 75 | 100 |

[Table 2]

Table 5.3.3-1: Minimum guardband (kHz) (FR1) (quotation from Table 5.3.3-1 of TS38.104 of the 3GPP)

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| 15 | 242.5 | 312.5 | 382.5 | 452.5 | 522.5 | 592.5 | 552.5 | 692.5 | N.A | N.A | N.A | N.A | N.A |
| 30 | 505 | 665 | 645 | 805 | 785 | 945 | 905 | 1045 | 825 | 965 | 925 | 885 | 845 |
| 60 | N.A | 1010 | 990 | 1330 | 1310 | 1290 | 1610 | 1570 | 1530 | 1490 | 1450 | 1410 | 1310 |

[Table 3]

| Table: 5.3.3-2: Minimum guardband (kHz) (FR2) (quotation from Table: 5.3.3-2 of TS38.104 of the 3GPP) | | | | |
|---|---|---|---|---|
| SCS (kHz) | 50 MHz | 100 MHz | 200 MHz | 400 MHz |
| 60 | 1210 | 2450 | 4930 | N. A |
| 120 | 1900 | 2420 | 4900 | 9860 |

[Table 4]

| Table: 5.3.3-3: Minimum guardband (kHz) of SCS 240 kHz SS/PBCH block (FR2) (quotation from TS38.104 Table: 5.3.3-3 of the 3GPP) | | | |
|---|---|---|---|
| SCS (kHz) | 100 MHz | 200 MHz | 400 MHz |
| 240 | 3800 | 7720 | 15560 |

In other words, it is sufficient if the communication control device 130 can acquire the information listed so far, and the communication device 110 does not necessarily need to provide the information in question for the communication control device 130. Furthermore, the intermediate device 130B (for example, a network manager) that puts a plurality of communication devices 110 together does not need to provide the information in question for the communication control device 130A. The communication device 110 or the intermediate device 130B providing information to the communication control device 130 or 130A is merely one means of information provision in the present exemplary embodiment. The information listed so far means that the information listed so far is information that may be necessary for the communication control device 130 to normally complete the present procedures, and means for providing the information do not matter.

<2.1.1.1 Supplement to Required Parameters>

In the registration procedure, in some cases, it is assumed that not only device parameters regarding the communication device 110 but also device parameters regarding the terminal 120 are requested to be registered in the communication control device 130. In such a case, the term "communication device" in the description given in <2.1.1> may be replaced with a term "terminal" or a term similar to the term "terminal", and the term "terminal" or the similar term may be applied. Furthermore, parameters peculiar to a "terminal" not described in <2.1.1> may also be treated as required parameters in the registration procedure. For example, a user equipment (UE) category specified by the 3GPP can be cited. <2.1.2 Details of Registration Processing>

As described above, the communication device 110) representing the wireless system that intends to utilize the shared frequency band generates a registration request including device parameters and notifies the communication control device 130 of the registration request.

Here, in a case where installer information is included in the device parameters, the communication device 110 may give tamper-proof processing or the like to the registration request by using the installer information. Furthermore, part or all of information included in the registration request may be given encryption processing. Specifically, for example, a peculiar public key may be shared in advance between the communication device 110 and the communication control device 130, and the communication device 110 may encrypt information using a secret key corresponding to the public key. Examples of the encryption target include sensitive security information, such as the position information.

Note that the ID and position information of the communication device 110 may be disclosed, and the communication control device 130 may preliminarily hold IDs and position information of main communication devices 110 existing in the coverage of the communication control device 130. In such a case, since the communication control device 130 can acquire position information from the ID of the communication device 110 that has transmitted a registration request, the position information does not need to be included in the registration request. Furthermore, it is also conceivable that the communication control device 130 returns necessary device parameters to the communication device 110 that has transmitted the registration request, and in response to the necessary device parameters, the communication device 110 transmits a registration request including the device parameters necessary for the registration. In this manner, the information included in the registration request may be different depending on the case.

After receiving the registration request, the communication control device 130 performs registration processing for the communication device 110, and returns a registration response according to a processing result. If there is no shortage or unusualness of information necessary for the registration, the communication control device 130 records the information in an internal or external storage device and provides notification of normal completion. Otherwise, notification of a registration failure is provided. In a case where the registration is normally completed, the communication control device 130 may allocate an ID to each of communication devices 110 and provide notification of the ID information at the time of response. In a case where the registration fails, the communication device 110 may provide notification of a corrected registration request again. Furthermore, the communication device 110 may change the registration request and try the registration procedure until the normal completion of.

Note that the registration procedure may be executed even after the registration is normally completed. Specifically, for example, the registration procedure may be executed again in a case where the position information is changed beyond a predefined standard due to movement, precision improvement, or the like. The predefined standard is typically defined by the legal system in each country or region. For example, in 47 C.F.R. Part 15 of the United States, a Mode II personal/portable white space device, that is, an apparatus utilizing an unused frequency, is obliged to perform a registration again in a case where the position of the device varies by 100 meters or longer.

<2.2 Available Frequency Information Query Procedure (Available Spectrum Query Procedure)>

An available frequency information query procedure is a procedure in which a wireless system that intends to utilize a shared frequency band queries the communication control device 130 about information regarding an available frequency. Note that the available frequency information query procedure does not necessarily need to be performed. Furthermore, a communication device 110 that makes a query as a representative of the wireless system that intends to utilize the shared frequency band may be the same as or different from the communication device 110 that has generated a registration request. Typically, a communication device 110 that makes a query notifies the communication control device 130 of a query request including information that can specify the communication device 110 in question, so that the procedure is started.

Here, typically, the available frequency information is information indicating a frequency at which the communication device 110 in question does not give fatal interference to a primary system, and secondary utilization is safely possible.

The available frequency information is determined, for example, on the basis of a secondary utilization prohibition area referred to as an exclusion zone. Specifically, for example, in a case where the communication device 110 is installed in a secondary utilization prohibition area provided for the purpose of protecting a primary system utilizing a frequency channel F1, the communication device 110 is not notified of the frequency channel referred to as F1 as an available channel.

The available frequency information may also be determined by, for example, the degree of interference given to the primary system. Specifically, for example, in a case where even outside the secondary utilization prohibition area, it is determined that critical interference is given to the primary system, the frequency channel in question may not be provided in notification as an available channel. An example of a specific calculation method is described in <2.2.2> described later.

Furthermore, as described above, a frequency channel that is not provided in notification as available may exist depending on other conditions than the primary system protection requirements. Specifically, for example, in order to avoid interference that may occur between communication devices 110 in advance, a frequency channel being utilized by another communication device 110 existing in the vicinity of the communication device 110 in question may not be provided in notification as an available channel. In this manner, the available frequency information set considering interference with another communication device 110 may be set as, for example, "recommended utilization frequency information", and provided together with the available frequency information. That is, the "recommended utilization frequency information" is desirably a subset of the available frequency information.

Even in a case of having an influence on a primary system, if the influence can be avoided by reducing transmission power, a frequency same as the frequency of the primary system or a neighboring communication device 110 may be provided in notification as an available channel. In such a case, typically, maximum allowable transmission power information is included in the available frequency information. The maximum allowable transmission power is typically expressed by equivalent isotropic radiated power (EIRP). The maximum allowable transmission power does not necessarily need to be limited to the EIRP, and may be provided by, for example, a combination of a transmitter power output (conducted power) and an antenna gain. Moreover, for the antenna gain, an allowable peak gain may be set for every spatial direction.

<2.2.1 Details of Required Parameters>

As information that can specify a wireless system that intends to utilize a shared frequency band, for example, unique information registered at the time of the registration procedure, the above-described ID information, and the like may be assumed.

Furthermore, the query request may also include query requirement information. The query requirement information may include, for example, information indicating a frequency band for which it is desired to know whether or not the frequency band is available. Furthermore, for example, transmission power information may also be included. The communication device 110 that makes a query may include the transmission power information in, for example, a case where it is desired to know only frequency information in which desired transmission power can be used. The query requirement information does not necessarily need to be included in the query request.

Furthermore, the query request may also include a measurement report. The measurement report includes a result of measurement performed by the communication device 110 and/or the terminal 120. Part or all of the measurement results may be represented by raw data or may be represented by processed data. For example, standardized metrics represented by reference signal received power (RSRP), reference signal strength indicator (RSSI), and reference signal received quality (RSRQ) may be used for the measurement.

<2.2.2 Details of Available Frequency Evaluation Processing>

After receiving the query request, available frequency is evaluated on the basis of the query requirement information. For example, as described above, available frequency can be evaluated considering the existence of a primary system, a secondary utilization prohibition area of the primary system, and a neighboring communication device 110.

The maximum allowable transmission power information may be derived. Typically, the maximum allowable transmission power information is reckoned by using allowable interference power information in a primary system or a protection zone of the primary system, position information about a reference point for computing an interference power level suffered by the primary system, registration information about the communication device 110, and a propagation loss estimation model. Specifically, as an example, the maximum allowable transmission power information is reckoned by the following mathematical expression. [Mathematical Formula 2]

$$P_{MaxTx\text{(dBm)}} = I_{Th\text{(dBm)}} + PL(d)_{\text{(dB)}} \qquad (2)$$

where $P_{MaXTx\text{(dBm)}}$ is maximum allowable transmission power, $I_{Th\text{(dBm)}}$ is allowable interference power (a limit value of allowable interference power), d is a distance between a predefined reference point and the communication device 110, and $PL(d)_{\text{(dB)}}$ is a propagation loss at the distance d. In Expression (2), the antenna gain in the transceiver is not included, but the antenna gain in the transceiver may be included according to an expression method of the maximum allowable transmission power (EIRP, conducted power, or the like) or a referred point of received power (antenna input point, antenna output point, or the like). Furthermore, feeder loss may be considered as necessary. The present exemplary embodiment is applied, for example, when the maximum allowable transmission power information is derived. The details will be described later.

Furthermore, Expression (2) is described on the basis of the supposition that a single communication device 110 is an interference source (single station interference). For example, in a case where it is necessary to consider cumulative interference (aggregated interference) from a plurality of communication devices 110 at the same time, a correction value may be added. Specifically, for example, the correction value may be determined on the basis of three types (fixed/predetermined, flexible, and flexible minimized) of interference margin schemes disclosed in Non-Patent Document 4 (ECC Report 186).

Note that the allowable interference power information itself is not necessarily directly available unlike Expression (2). For example, in a case where a signal power-to-interference power ratio (SIR), a signal to interference plus noise ratio (SINR), an interference-to-noise ratio (INR), and the like required for a primary system are available, the signal power-to-interference power ratio (SIR), the signal to interference plus noise ratio (SINR), the interference-to-noise ratio (INR), and the like may be converted into allowable interference power and used. Note that such conversion processing is not limited to this processing, and may be applied to processing of other procedures.

Note that although Expression (2) is expressed using logarithms, it is a matter of course that Expression (2) may be converted into antilogarithms and used at the time of implementation. Furthermore, all parameters in logarithmic notation described in the present disclosure may be appropriately converted into antilogarithms and used.

Furthermore, in a case where the foregoing transmission power information is included in the query requirement information, the available frequency can be evaluated by a method different from the foregoing method. Specifically, for example, in a case where it is supposed that desired transmission power indicated by the transmission power information is used, when an estimated amount of given interference is less than allowable interference power in a primary system or a protection zone of the primary system, it is determined that a frequency channel in question is available, and the communication device 110 is notified of the frequency channel.

Furthermore, for example, in a case where an area or a space in which the communication device 110 can use a shared frequency band is preliminarily defined, similarly to an area of a radio environment map (REM), the available frequency information may be derived simply on the basis of only coordinates (coordinates of an X axis, a Y axis, and a Z axis of the communication device 110, or a latitude, a longitude, and a height above ground level) included in the position information about the communication device 110. Furthermore, for example, even in a case where a lookup table that associates coordinates of the position of the communication device 110 with available frequency information is prepared, the above-described available frequency information may be derived on the basis of only the position information about the communication device 110. As described above, there are various methods for determining the available frequency, and the methods are not limited to the example of the present disclosure.

Furthermore, in a case where the communication control device 130 acquires information about a capability of a band extension technology, such as carrier aggregation (CA) or channel bonding, as the frequency band information supported by the communication device 110, the communication control device 130 may include an available combination, a recommended combination, or the like thereof in the available frequency information.

Furthermore, in a case where the communication control device 130 acquires information about a combination of frequency bands supported by dual connectivity and multi connectivity, as the frequency band information supported by the communication device 110, the communication control device 130 may include information, such as an available frequency and a recommended frequency, in the available frequency information, for dual connectivity and multi connectivity.

Furthermore, in a case where the available frequency information is provided for the band extension technology as described above, when the imbalance of the maximum allowable transmission power occurs between a plurality of frequency channels, the available frequency information may be provided after the maximum allowable transmission power of each of the frequency channels is adjusted. For example, from a perspective of primary system protection, the maximum allowable transmission power of each frequency channel may be aligned with the maximum allowable transmission power of a frequency channel having a low maximum allowable power flux density (power spectral density (PSD)).

The evaluation of the available frequency does not necessarily need to be performed after the query request is received. For example, after the normal completion of the above-described registration procedure, the communication control device 130 may independently perform the evaluation of the available frequency without a query request. In such a case, an REM or a lookup table shown above as an example, or an information table similar to the REM or the lookup table may be created.

Furthermore, a radio wave utilization priority, such as a PAL or a GAA, may also be evaluated. For example, in a case where registered device parameters or query requirements include information regarding a radio wave utilization priority, it may be determined whether frequency utilization is possible on the basis of the priority, and the notification may be made. Furthermore, for example, as disclosed in Non-Patent Document 3, in a case where information regarding a communication device 110 that performs high priority utilization (for example, a PAL) (referred to as a Cluster List in Non-Patent Document 3) is registered in the communication control device 130 from the user in advance, the evaluation may be performed on the basis of the information.

After the evaluation of the available frequency is completed, the communication control device 130 notifies the communication device 110 of the evaluation result.

The communication device 110 may select desired communication parameters by using the evaluation result received from the communication control device 130.

<2.3 Frequency Utilization Permission Procedure (Spectrum Grant Procedure)>

A frequency utilization permission procedure is a procedure for a wireless system that intends to utilize a shared frequency band to receive a secondary-utilization permission of the frequency from the communication control device 130. A communication device 110 that performs the frequency utilization permission procedure as a representative of the wireless system may be the same as or different from the communication device(s) 110 that has/have performed the procedures so far. Typically, a communication device 110 notifies the communication control device 130 of a frequency utilization permission request including information that can specify the communication device 110 in question, so that the procedure is started. Note that as described above, the available frequency information query procedure is not essential. Therefore, the frequency utilization permission procedure may be performed next to the available frequency information query procedure, or may be performed next to the registration procedure.

In the present exemplary embodiment, it is assumed that at least the following two types of frequency utilization permission request schemes may be used.

- Designation scheme
- Flexible scheme

The designation scheme is a request scheme in which the communication device 110 designates desired communication parameters and requests the communication control device 130 to permit operation based on the desired communication parameters. The desired communication parameters include, but are not particularly limited to, a frequency channel to be utilized, maximum transmission power, and the like. For example, a parameter peculiar to a wireless interface technology (such as a modulation scheme or a duplex mode) may be designated. Furthermore, information indicating a radio wave utilization priority, such as a PAL or a GAA, may be included.

The flexible scheme is a request scheme in which the communication device 110 designates only requirements regarding communication parameters, and requests the communication control device 130 to designate communication parameters that can permit secondary utilization while satisfying the requirements. Examples of the requirements regarding the communication parameters include, but are not particularly limited to, a bandwidth, desired maximum transmission power, desired minimum transmission power, and the like. For example, a parameter peculiar to a wireless interface technology (such as a modulation scheme or a duplex mode) may be designated. Specifically, for example, one or more of TDD frame structures may be selected in advance and provided in notification.

Similarly to the query request, the frequency utilization permission request may also include a measurement report in either the designation scheme or the flexible scheme. The measurement report includes a result of measurement performed by the communication device 110 and/or the terminal 120. The measurement may be represented by raw data or processed data. For example, standardized metrics represented by reference signal received power (RSRP), reference signal strength indicator (RSSI), and reference signal received quality (RSRQ) may be used for the measurement.

Note that the scheme information used by the communication device 110 may be registered in the communication control device 130 at the time of the registration procedure described in <2.1>.

<2.3.1 Details of Frequency Utilization Permission Processing>

After receiving the frequency utilization permission request, the communication control device 130 performs frequency utilization permission processing on the basis of the frequency utilization permission request scheme. For example, it is possible to utilize the technique described in <2.2> to perform the frequency utilization permission processing considering the existence of a primary system, a secondary utilization prohibition area, and a neighboring communication device 110, and the like. The present exemplary embodiment is applied to, for example, frequency utilization permission processing. The details will be described later.

In a case where the flexible scheme is used, the maximum allowable transmission power information may be derived by utilizing the technique described in <2.2.2>. Typically, the maximum allowable transmission power information is reckoned by using allowable interference power information in a primary system or a protection zone of the primary system, position information about a reference point for computing an interference power level suffered by the primary system, registration information about the communication device 110, and a propagation loss estimation model. Specifically, as an example, the maximum allowable transmission power information is reckoned by the above-described Expression (2).

Furthermore, as described above, Expression (2) is described on the basis of the supposition that a single communication device 110 is an interference source. For example, in a case where it is necessary to consider cumulative interference (aggregated interference) from a plurality of communication devices 110 at the same time, a correction value may be added. Specifically, for example, the correction value may be determined on the basis of three types (fixed/predetermined, flexible, and flexible minimized) of schemes disclosed in Non-Patent Document 4 (ECC Report 186).

The communication control device 130 may use various propagation loss estimation models in the frequency utilization permission procedure, the available frequency evaluation processing for an available frequency information query request, and the like. In a case where a model is designated for every application, it is desirable to use the designated model. For example, in Non-Patent Document 3 (WINNF-TS-0112), a propagation loss model, such as extended Hata (eHATA) or an Irregular Terrain Model (ITM), is adopted for every application. Of course, the propagation loss model is not limited to the examples.

Propagation loss estimation models that need information regarding radio wave propagation paths also exist. The information regarding a radio wave propagation path may include, for example, information indicating the inside and outside of a line of sight (line of sight (LOS) and/or non line of sight (NLOS), topographical information (undulations, sea levels, and the like), environmental information (urban, suburban, rural, open sky, etc.), and the like. When utilizing the propagation loss estimation model, the communication control device 130 may infer these pieces of information from the already acquired registration information about the communication device 110 or information about a primary system. Alternatively, in a case where there are parameters designated in advance, it is desirable to use the parameters.

In a case where propagation loss estimation models are not designated in predefined applications, propagation loss estimation models may be selectively used as necessary. For example, when interference power given to other communication devices 110 is estimated, a model a loss calculated with which is smaller, such as a free space loss model, can be selectively used, but when the coverage of a communication device 110 is estimated, a model a loss calculated with which is larger can be selectively used.

Furthermore, in a case where a designated propagation loss estimation model is used, the frequency utilization permission processing can be performed by evaluating a given interference risk, as an example. Specifically, for example, in a case where it is supposed that desired transmission power indicated by transmission power information is used, when an estimated amount of given interference is less than allowable interference power in a primary system or a protection zone of the primary system, it is determined that utilization of a frequency channel in question can be permitted, and the communication device 110 is notified of the frequency channel.

In the technique of either the designation scheme or the flexible scheme, a radio wave utilization priority, such as a PAL or a GAA, may also be evaluated similarly to the query request. For example, in a case where registered device parameters or query requirements include information regarding a radio wave utilization priority, it may be determined whether frequency utilization is possible on the basis of the priority, and the notification may be made. Furthermore, for example, in a case where information regarding a communication device 110 that performs high priority utilization (for example, a PAL) is registered in the communication control device 130 from the user in advance, the evaluation may be performed on the basis of the information. For example, in Non-Patent Document 3 (WINNF-TS-0112), information regarding the communication device 110 is referred to as a Cluster List.

The frequency utilization permission processing does not necessarily need to be performed due to the reception of the frequency utilization permission request. For example, after the normal completion of the above-described registration procedure, the communication control device 130 may independently perform the frequency utilization permission processing without the frequency utilization permission request. Furthermore, for example, the frequency utilization permission processing may be performed at regular intervals. In such a case, the foregoing REM or lookup table, or an information table similar to the REM or lookup table may be created. Therefore, since a frequency that can be permitted is determined only by the position information, the communication control device 130 can quickly return a response after receiving the frequency utilization permission request.

<2.4 Frequency Utilization Notification (Spectrum Use Notification/Heartbeat)>

A frequency utilization notification is a procedure in which a wireless system utilizing a shared frequency band notifies the communication control device 130 of utilization of a frequency based on communication parameters allowed to be utilized in the frequency utilization permission procedure. A communication device 110 that performs the frequency utilization notification as a representative of the wireless system may be the same as or different from the communication device(s) 110 that has/have performed the procedures so far. Typically, the communication device 110 notifies the communication control device 130 of a notification message including information that can specify the communication device 110 in question.

The frequency utilization notification is desirably performed periodically until the utilization of the frequency is rejected from the communication control device 130. In that case, the frequency utilization notification is also referred to as a heartbeat.

After receiving the frequency utilization notification, the communication control device 130 may determine whether or not to start or continue the frequency utilization (in other words, radio wave transmission at the permitted frequency). Examples of the determination method include confirmation of the frequency utilization information about a primary system. Specifically, it is possible to determine permission or denial of the start or continuation of the frequency utilization (radio wave transmission at the permitted frequency) on the basis of a change in the utilization frequency of the primary system, a change in the frequency utilization status of the primary system whose radio wave utilization is not steady (for example, a marine radar of the CBRS of the United States), and the like. If the start or continuation is permitted, the communication device 110 may start or continue frequency utilization (radio wave transmission at the permitted frequency).

After receiving the frequency utilization notification, the communication control device 130 may order the communication device 110 to reconfigure the communication parameters (reconfiguration). Typically, in the response of the communication control device 130 to the frequency utilization notification, the reconfiguration of the communication parameters may be ordered. For example, information regarding recommended communication parameters (hereinafter, recommended communication parameter information) may be provided. The communication device 110 for which the recommended communication parameter information has been provided desirably performs the frequency utilization permission procedure described in <2.4> again using the recommended communication parameter information.

<2.5 Supplement to Various Procedures>

The above-described procedures do not necessarily need to be implemented individually, as described below. For example, two different procedures may be implemented by substituting a third procedure with roles of the two different procedures. Specifically, for example, the registration request and the available frequency information query request may be integrally provided in notification. Furthermore, for example, the frequency utilization permission procedure and the frequency utilization notification may be integrally performed. As a matter of course, these combinations are not limiting, and three or more procedures may be performed integrally. Furthermore, as described above, a plurality portions of one procedure may be separately performed.

Furthermore, the expression "to acquire" or an expression similar to the expression in the present disclosure does not necessarily mean to acquire according to the procedure described in the present disclosure. For example, although in the available frequency evaluation processing, it is described that the position information about the communication device 110 is used, it means that the information acquired in the registration procedure does not necessarily need to be used, and in a case where the position information is included in the available frequency query procedure request, the position information may be used. In other words, the procedure for acquisition described in the present disclosure is an example, and acquisition by another procedure is also allowed within the scope of the present disclosure and within the scope of technical feasibility.

Furthermore, the information described being possible to be included in a response from the communication control device 130 to the communication device 110 may be actively provided in notification from the communication control device 130 in a push scheme if possible. As a specific example, the available frequency information, the recommended communication parameter information, the radio wave transmission continuation denial notification, and the like may be provided in notification in a push scheme.

<2.6 Various Procedures regarding Terminal>

The description has been made mainly on the assumption of the processing in the communication device 110A. However, in some exemplary embodiments, not only the communication device 110A but also the terminal 120 and the communication device 110B may operate under the management of the communication control device 130. That is, a scenario in which the communication parameters are determined by the communication control device 130 is assumed. Even in such a case, basically, each procedure described from <2.1> to <2.4> can be used. However, unlike the communication device 110A, the terminal 120 and the communication device 110B need to use a frequency managed by the communication control device 130 for the backhaul link, and cannot perform radio wave transmission without the permission. Therefore, it is desirable to start backhaul communication for the purpose of accessing the communication control device 130 only after a radio wave or an authorization signal transmitted by the communication device 110A (communication device 110 capable of providing wireless communication service or master communication device 110 of a master/slave type) is sensed.

On the other hand, under the management of the communication control device 130, allowable communication parameters may also be set for the terminal or the communication device 110B for the purpose of primary system protection. However, the communication control device 130 cannot know the position information and the like of these devices in advance. Furthermore, there is a high possibility that these devices have mobility. That is, the position information is dynamically updated. Depending on the legal system, in a case where the position information varies by a fixed amount or more, re-registration in the communication control device 130 may be obligated.

Such various utilization forms, operation forms, and the like of the terminal 120 and the communication device 110 are added to specify the following two types of communication parameters in the operation forms of TVWSs defined by the Office of Communication (Ofcom) in the United Kingdom (Non-Patent Document 5).

- Generic operational parameters
- Specific operational parameters

The generic operational parameters are communication parameters defined as "parameters that can be used by any slave white space device (WSD) located within the coverage area of a predefined master WSD (corresponding to the communication device 110)" in Non-Patent Document 5. As a feature, the generic operational parameters are calculated by a white space database (WSDB) without using the position information about a slave WSD.

The generic operational parameters may be provided by unicast or broadcast from the communication device 110 already permitted by the communication control device 130 to transmit radio waves. For example, a broadcast signal represented by a contact verification signal (CVS) specified in Part 15 Subpart H of the FCC rule of the United States may be used. Alternatively, the generic operational parameters may be provided by a broadcast signal peculiar to a wireless interface. Therefore, the terminal 120 and the communication device 110B can be treated as communication parameters used for radio wave transmission for the purpose of accessing the communication control device 130.

The specific operational parameters are communication parameters defined as "parameters usable by specific slave white space devices (WSDs)" in Non-Patent Document 5. In other words, the specific operational parameters are communication parameters calculated using device parameters of a slave WSD corresponding to the terminal 120. As a feature, the specific operational parameters are calculated by a WSDB using the position information about a slave WSD.

<2.7 Procedure Occurring between Communication Control Devices>

<2.7.1 Information Exchange>

The communication control device 130 can exchange management information with another communication control device 130. At least the following information is desirably exchanged.

- Information related to communication device 110
- Protection target system information

The information related to the communication device 110 includes at least registration information and communication parameter information about the communication device 110 operating under permission of the communication control device 130. Registration information about the communication device 110 having no permitted communication parameters may be included.
The registration information about the communication device 110 is typically device parameters of the communication device 110 registered in the communication control device 130 in the above-described registration procedure. Not all the registered information necessarily needs to be exchanged. For example, information that may correspond to personal information does not need to be exchanged. Furthermore, when the registration information about the communication device 110 is exchanged, the registration information may be encrypted and exchanged, or the information may be exchanged after the content of the registration information is made ambiguous. For example, information converted into a binary value or information signed using an electronic signature mechanism may be exchanged.
The communication parameter information about the communication device 110 is typically information related to communication parameters currently used by the communication device 110. At least information indicating the utilized frequency and the transmission power is desirably included. Other communication parameters may be included.
Area information is typically information indicating a predefined geographical zone. The information may include zone information about various attributes in various aspects.
For example, as in a PAL Protection Area (PPA) disclosed in Non-Patent Document 3 (WINNF-TS-0112), protection zone information about the communication device 110 serving as a high priority secondary system may be included in the area information. The area information in this case may be expressed by, for example, a set of three or more coordinates indicating a geographical position. Furthermore, for example, in a case where a plurality of communication control devices 130 can refer to a common external database, the area information may be expressed by a unique ID, and an actual geographical zone may be referred to from the external database using the ID.
Furthermore, for example, information indicating the coverage of the communication device 110 may be included. The area information in this case may also be expressed by, for example, a set of three or more coordinates indicating a geographical position. Furthermore, for example, assuming that the coverage is a circle centered on the geographical position of the communication device 110, the area information may also be expressed by information indicating the size of the radius. Furthermore, for example, in a case where a plurality of communication control devices 130 can refer to a common external database that records area information, the information indicating the coverage may be expressed by a unique ID, and the actual coverage may be referred to from the external database using the ID.
Furthermore, as another aspect, information related to an area section preliminarily defined by an administration or the like may also be included. Specifically, for example, it is possible to indicate a fixed zone by indicating an address. Furthermore, for example, a license area or the like may be similarly expressed.
Furthermore, as still another aspect, the area information does not necessarily need to express a planar area, and may express a three-dimensional space. For example, the area information may be expressed using a spatial coordinate system. Furthermore, for example, information indicating a predefined closed space, such as a floor number, a floor, and a room number of a building, may be used.
The protection target system information is, for example, information about a wireless system treated as a protection target, such as the aforementioned Incumbent Tier. Examples of status in which this information needs to be exchanged include the state in which cross-border coordination is necessary. It is well conceivable that between neighboring countries or regions, different protection targets exist in the same band. In such a case, the protection target system information may be exchanged as necessary between different communication control devices 130 in different countries or regions to which the communication control devices 130 belong.
As another aspect, the protection target system information may include information about a secondary licensee, and information about a wireless system operated by the secondary licensee. The secondary licensee is specifically the lessee of the license, and, for example, it is assumed that the secondary licensee borrows a PAL from the holder and operates the wireless system owned by the secondary licensee. In a case where the communication control device 130 independently performs the lease management, information about the secondary licensee and information about the wireless system operated by the secondary licensee may be exchanged with another communication control device for the purpose of protection.

These pieces of information may be exchanged between the communication control devices 130 regardless of decision-making topologies applied to the communication control devices 130.

Furthermore, these pieces of information may be exchanged in various schemes. Examples of the schemes will be described below. . ID designation scheme

- Period designation scheme
- Zone designation scheme
- Dump scheme

The ID designation scheme is a scheme in which an ID preliminarily given to specify information managed by the communication control device 130 is used to acquire information corresponding to the ID. For example, it is supposed that a first communication control device 130 manages a communication device 110 with an ID of AAA. At this time, a second communication control device 130 designates the ID of AAA and makes an information acquisition request to the first communication control device 130. After receiving the request, the first communication control device 130 searches for information about the ID of AAA, and provides notification, by a response, of information regarding the communication device 110 of the ID of AAA, for example, the registration information, the communication parameter information, and the like.

The period designation scheme is a scheme in which information satisfying a predefined condition in a designated specific period may be exchanged.

Examples of the predefined condition include the presence or absence of information update. For example, in a case where acquisition of information regarding communication devices 110 in a specific period is designated with a request, notification of registration information about communication devices 110 newly registered within the specific period may be provided with a response. Furthermore, notification of registration information or communication parameter information about communication devices 110 whose communication parameters have been changed within the specific period may also be provided with a response.

Examples of the predefined condition include whether recording has been performed by the communication control device 130. For example, in a case where acquisition of information regarding communication devices 110 in a specific period is designated with a request, notification of registration information or communication parameter information recorded by the communication control device 130 in the period may be provided with a response. In a case where information is updated in the period, notification of the latest information in the period may be provided. Alternatively, notification of an update history may be provided for every piece of information.

In the zone designation scheme, a specific zone is designated, and information about communication devices 110 belonging to the zone is exchanged. For example, in a case where acquisition of information regarding communication devices 110 in a specific zone is designated with a request, notification of registration information or communication parameter information about communication devices 110 installed in the zone may be provided with a response.

The dump scheme is a scheme in which all information recorded by the communication control device 130 is provided. At least information related to communication devices 110 and area information are desirably provided by the dump scheme.

All of the above description of the information exchange between the communication control devices 130 is based on a pull scheme. That is, the information exchange is a form in which information corresponding to a parameter designated with a request is responded, and may be implemented by Hyper Text Transfer Protocol (HTTP) GET method as an example. However, the communication exchange does not need to be limited to the pull scheme, and information may be actively provided for another communication control device 130 by a push scheme. The push scheme may be implemented by HTTP POST method as an example.

<2.7.2 Ordering/Asking Procedure>

The communication control devices 130 may order or ask each other. Specifically, as an example, reconfiguration of communication parameters of the communication device 110 is exemplified. For example, in a case where it is determined that a first communication device 110 managed by a first communication control device 130 is greatly interfered with by a second communication device 110 managed by a second communication control device 130, the first communication control device 130 may ask the second communication control device 130 to change the communication parameters of the second communication device 110.

Another example is reconfiguration of area information. For example, in a case where calculation of coverage information or protection zone information regarding a second communication device 110 managed by a second communication control device 130 is incomplete, a first communication control device 130 may ask the second communication control device 130 to reconfigure area information in question. Besides these examples, area information reconfiguration may be asked for various reasons.

<2.8 Information Transmission Means>

Notification (signaling) between entities described so far may be implemented via various media. The description will be made with E-UTRA or 5G NR as an example. As a matter of course, the notification (signaling) is not limited to E-UTRA and 5G NR at a time of performing the notification (signaling).

<2.8.2 Signaling between Communication Control Device 130 and Communication Device 110>

A notification from the communication device 110 to the communication control device 130 may be performed in, for example, an application layer. For example, Hyper Text Transfer Protocol (HTTP) may be used for the performing. Signaling may be performed by describing required parameters in HTTP message body according to a predefined manner. Moreover, in a case where HTTP is used, a notification from the communication control device 130 to the communication device 110 is also performed according to a HTTP response mechanism.

<2.8.3 Signaling between Communication Device 110 and Terminal 120>

A notification from the communication device 110 to the terminal 120 may be performed using, for example, at least one of wireless resource control (radio resource control (RRC)) signaling, system information (SI), or downlink control information (DCI). Furthermore, as downlink physical channels, there are a physical downlink control channel (PDCCH), a physical downlink shared channel (PDSCH), a physical broadcast channel (PBCH), an NR-PDCCH, an NR-PDSCH, an NR-PBCH, and the like, but at least one of the PDCCH, the PDSCH, the PBCH, the NR-PDCCH, the NR-PDSCH, the NR-PBCH, or the like may be used to perform the notification.

A notification from the terminal 120 to the communication device 110 may be performed using, for example, radio resource control (RRC) signaling or uplink control information (UCI). Furthermore, an uplink physical channel (a physical uplink control channel (PUCCH), a physical uplink shared channel (PUSCH), or a physical random access channel (PRACH)) may be used for the performing.

The signaling is not limited to the physical layer signaling described above, and may be performed in a higher layer. For example, when the signaling is performed in an application layer, the signaling may be performed by describing required parameters in HTTP message body according to a predefined manner.

<2.8.4 Signaling between Terminals 120>

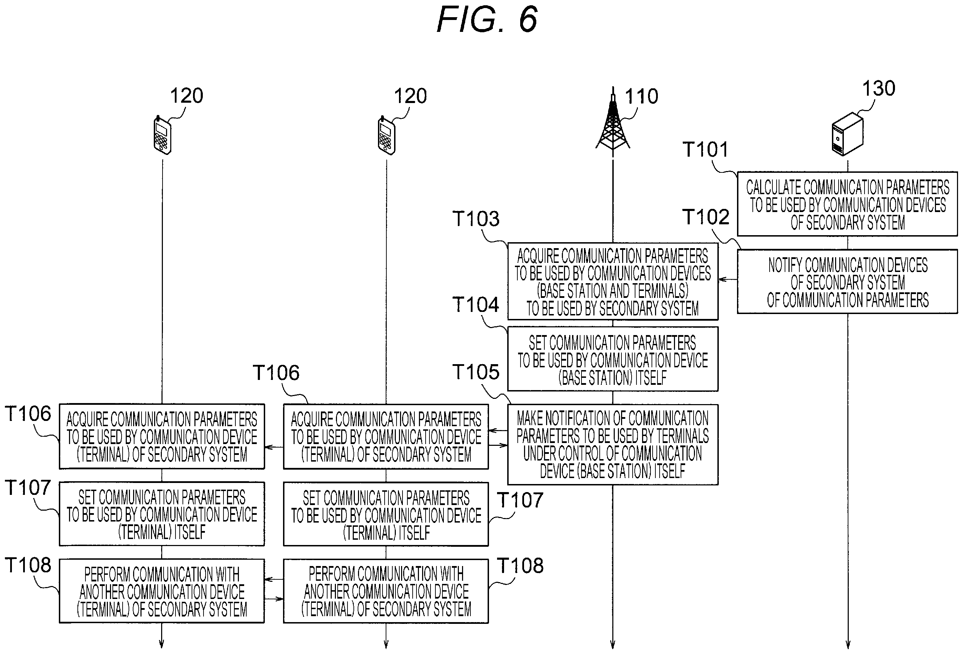

Fig. 6 illustrates an example of a flow of signaling in a case where device-to-device (D2D) or vehicle-to-everything (V2X), which is communication between the terminals 120, is assumed as communication of a secondary system. D2D or V2X, which is communication between the terminals 120, may be performed using a physical sidelink channel (a physical sidelink control channel (PSCCH), a physical sidelink shared channel (PSSCH), or a physical sidelink broadcast channel (PSBCH)). The communication control device 130 calculates communication parameters to be used by the secondary system (T101), and notifies the communication device 110 of the secondary system of the calculated communication parameters (T102). Values of the communication parameters may be determined and provided in notification, or conditions indicating ranges and the like of the communication parameters may be determined and provided in notification. The communication device 110 acquires the communication parameters to be used by the secondary system (T103), and sets communication parameters to be used by the communication device 110 itself (T104). Then, the terminals 120 under the control of the communication device 110 are notified of communication parameters to be used by the terminals 120 (T105). Each of the terminals 120 under the control of the communication device 110 acquires (T106) and sets (T107) the communication parameters to be used by the terminal 120. Then, communication with another terminal 120 of the secondary system is performed (T108).

Communication parameters in a case where a target frequency channel of frequency sharing is used for a sidelink (direct communication between the terminals 120) may be provided in notification, acquired, or set in a form in which the communication parameters are associated with a resource pool for the sidelink in the target frequency channel. The resource pool is a wireless resource for a sidelink set by a specific frequency resource or time resource. Examples of the frequency resource include a resource block, a component carrier, and the like. Examples of the time resource include a wireless frame (radio frame), a subframe, a slot, a mini-slot, and the like. In a case where a resource pool is set in a frequency channel that is a target of frequency sharing, the resource pool is set for the terminal 120 by the communication device 110 on the basis of at least one of RRC signaling, system information, or downlink control information. Then, communication parameters to be applied in the resource pool and the sidelink are also set for the terminal 120 by the communication device 110 on the basis of at least one of RRC signaling, system information, or downlink control information from the communication device 110 to the terminal 120. A notification of the setting of the resource pool and a notification of the communication parameters to be used in the sidelink may be performed simultaneously or individually.

<<3. Grant Temporal Modification Procedure>>

As described above, the communication device 110, such as a Citizens Broadband Radio Service Device (CBSD), can perform radio wave utilization on a priority of a Priority Access (PA) or a General Authorized Access (GAA) basis according to the frequency sharing standard WINNF-TS-0016 for a 3550 to 3700 MHz band in the United States. In permitting and authorizing radio wave utilization, the communication control device 130, such as a SAS, examines a set of the maximum allowable EIRP and a frequency channel (frequency band) requested from the communication device 110. The requested maximum allowable EIRP and frequency channel are authenticated as a grant. At the time of the authentication of the grant, the communication control device 130 notifies the communication device 110 of a priority of either a PA or a GAA. Furthermore, at the time of the authentication of the grant, the communication control device 130 issues a permission identifier (grant ID) associated with the authenticated maximum allowable EIRP and frequency channel, and the priority, and notifies the communication device 110 of the permission identifier. The radio wave utilization of the communication device 110 based on the grant is managed by the above-described procedure referred to as a heartbeat performed between the communication control device 130 and the communication device 110 (hereinafter, heartbeat procedure).
In the present exemplary embodiment, a grant temporal modification procedure is newly introduced while making good use of a mechanism of the heartbeat procedure and dynamic protection area (DPA) protection. When the communication control device 130 (SAS) recognizes radio wave utilization by a radar system that is a primary system, the communication control device 130 includes a response code that gives an instruction on a stop of radio wave transmission (for example, "SUSPENDED_GRANT" (a temporal stop of radio wave transmission)) in a heartbeat response transmitted in the heartbeat procedure. Therefore, the communication device 110 is instructed to stop radio wave transmission for the grant using the same frequency band as the frequency band of the radar system. At this time, recommended operation parameters can be included in the heartbeat response, and the communication device that has acquired the recommended operation parameters can newly request a grant while maintaining the grant ID using the recommended operation parameters. One of features of the present exemplary embodiment is that as described above, the grant temporal modification procedure is executed by utilizing the recommended operation parameters by using, as a trigger, the occurrence of the necessity of returning the heartbeat response that gives an instruction on the stop of the radio wave transmission.
Fig. 7 is a block diagram of a communication system according to an exemplary embodiment of the present disclosure. Fig. 8 is an operation sequence diagram performed between the communication device 110 and the communication control device 130. The communication system in Fig. 7 includes a communication device 110 and a communication control device 130. Only blocks regarding portions that perform processing mainly related to the present exemplary embodiment are illustrated, and illustration of blocks regarding other processing is omitted.
The communication control device 130 includes a reception unit 31, a determination unit 32, a processing unit 33, a transmission unit 34 (a first transmission unit and a second transmission unit), a control unit 35, a storage unit 36, and a detection unit 37. The control unit 35 controls the entire communication control device 130 by controlling each element in the communication control device 130.
The communication device 110 includes a reception unit 11, a processing unit 13, a transmission unit 14, a control unit 15, and a storage unit 16. The control unit 15 controls the entire communication device 110 by controlling each element in the communication device 110.
In the storage unit 36 of the communication control device 130, various types of information preliminarily necessary for communication with the communication device 110 and other communication control devices are preliminarily stored. In the storage unit 16 of the communication device 110, various types of information preliminarily necessary for communication with the communication control device 130 and communication with the terminals 120 as service provision targets are preliminarily stored.
Each of the processing blocks of the communication control device 130 and the communication device 110 is constituted by a hardware circuit, software (programs and the like), or both of a hardware circuit and software (programs and the like). The storage unit 36 and the storage unit 16 are constituted by an arbitrary storage device, such as a memory device, a magnetic storage device, or an optical disk. The storage unit 36 and the storage unit 16 may not be in the communication control device 130 and the communication device 110 but may be externally connected to the communication control device 130 and the communication device 110 in a wired or wireless manner. The transmission unit 34 and the reception unit 31 in the communication control device 130 and the transmission unit 14 and the reception unit 11 in the communication device 110 may include one or more network interfaces according to the number or types of connectable networks. In a case where the transmission unit 34 and the reception unit 31 in the communication control device 130 and the transmission unit 14 and the reception unit 11 in the communication device 110 perform wireless communication, the communication control device 130 and the communication device 110 may each include at least one antenna.

The communication system in Fig. 7 provides a mechanism for changing a frequency channel of a Priority Access License (PAL) grant from a primary channel to a backup channel in a case where the primary channel and the backup channel are set to PALs. The PAL grant is a grant permitted by a SAS based on the PAL. Furthermore, a GAA grant is a grant permitted by the SAS based on a GAA. The GAA grant has a lower priority than the PAL grant, and communication devices that communicate in the PAL grant are protected by the SAS from interference from devices that communicate in the GAA. The primary channel corresponds to a channel (first frequency band) utilization of which is permitted with a PAL grant ID (permission identifier), and the backup channel corresponds to a channel (second frequency band) that is a change destination candidate for the first frequency band.

It is assumed that the backup channel is set to an unused channel of 10 MHz in a license area in a 3,550 to 3,600 MHz band used only by a radar system (Federal Incumbent) that is a primary system used by the United States Navy as a primary utilizer in an aircraft carrier.

In the following description, it is assumed that the communication device 110 is a CBSD and the communication control device 130 is a SAS.

The detection unit 37 of the communication control device 130 performs detection processing for detecting radio wave utilization by a radar system. The detection unit 37 may include an antenna for the detection processing. Alternatively, in a case where an antenna is provided in the reception unit 31, the detection unit 37 may perform the detection processing via the reception unit 31.

When the determination unit 32 acquires the detection information, the determination unit 32 recognizes that it is necessary to protect a dynamic protection area (in other words, the DPA becomes ON from OFF), and specifies a grant for which radio wave transmission is to be stopped among grants given to the communication device 110. That is, a grant that permits utilization of the primary channel including the same frequency as the frequency of the channel used in the radar system is specified.

In order to specify the grant, the determination unit 32 may refer to a DPA move list storing an ID (permission identifier) of a grant for which radio wave transmission is to be stopped in a case where radio wave utilization by the radar system is detected. The DPA move list is generated as part of processing by Coordinated Periodic Activities among SASs (CPAS). CPAS is a procedure performed once every 24 hours among a plurality of communication control devices 130 (SASs). In the CPAS, calculation and the like related to higher-tier protection are executed. For example, in the procedure, interference calculation is performed, and as a result of the interference calculation, information, such as managed grants, and the positions of communication devices 110 under management, is shared with other communication control devices 130. As part of this procedure, a DPA move list is created that stores grants for which radio wave transmission is to be stopped in a case where radio wave utilization by the radar system is detected is created. The created DPA move list is stored in the storage unit 36. The determination unit 32 can refer to the DPA move list to easily specify grants for which radio wave utilization is to be stopped. In the present exemplary embodiment, it is assumed that the DPA move list is used.

The DPA move list is generated for every channel. In a case where a plurality of primary channels exists, the DPA move list is generated for every primary channel. Furthermore, the DPA move list may also be generated for a backup channel. Note that the DPA move list may be created for a collection of a plurality of channels.

The determination unit 32 checks whether a PAL grant is included in the DPA move list of the primary channel. In a case where a PAL grant is included, the PAL grant is specified as a grant for which radio wave transmission is to be stopped. The determination unit 32 stores the ID (permission identifier) of the specified grand in the storage unit 36. Furthermore, the determination unit 32 may check backup channel information set to PALs, and include all GAA grants using the backup channel in a DPA move list for the backup channel. In a case where a communication device 120 utilizes the backup channel, the DPA move list may be used to protect the communication device 120 from radio wave interference by devices (communication devices and terminals) utilizing the backup channel in GAAs.

The reception unit 31 of the communication control device 130 receives a heartbeat request from the communication device 110 as the heartbeat procedure (S101 in Fig. 8).

On the basis of information stored in the storage unit 36, the determination unit 32 of the communication control device 130 checks whether the grant related to the heartbeat request is a PAL grant for which radio wave transmission is to be stopped. In a case where the grant related to the heartbeat request is a PAL grant for which radio wave transmission is to be stopped, the processing unit 33 is notified of the fact.

The processing unit 33 selects one or more backup channels set to the PAL grant. Furthermore, the same transmission power as the transmission power permitted with the PAL grant (for example, the maximum EIRP) is determined as transmission power for the selected backup channel. However, in a case where there is a possibility that the current transmission power exceeds an interference margin, EIRP within a range not exceeding the interference margin may be calculated, and the calculated EIRP may be determined as transmission power allowable for the backup channel. The processing unit 33 creates a heartbeat response including recommended operation parameters representing information about the selected backup channel and the determined transmission power, and a response code. For example, 501 (SUSPENDED_GRANT, that is, a temporal stop of radio wave transmission) is used as the response code.

Alternatively, by newly preparing a dedicated response code and including the dedicated response code in the heartbeat response, it may be recognized that radio wave utilization by the radar system is detected in the primary channel. However, it is assumed that the dedicated response code does not cause cancellation of the grant. That is, it is assumed that a code, such as TERMINATED_GRANT, that causes cancellation of a grant is not used. For example, an indicator indicating that the channel is a backup channel may be included in the recommended operation parameters without using the dedicated response code. This also enables the communication device 110 to recognize the status (that radio wave utilization by the radar system is detected in the primary channel).

The heartbeat response including the recommended operation parameters corresponds to recommendation information for recommending the backup channel (second frequency band) as a change destination of the primary channel (first frequency band) utilized by the communication device 110 permitted with the grant ID (permission identifier) to utilize the primary channel.

In the present exemplary embodiment, the heartbeat response including the recommended operation parameters is transmitted in a case where radio wave utilization by the radar system is detected, but the condition for transmitting the heartbeat response including the recommended operation parameters may be another condition. For example, the condition may be a case where the primary channel cannot be utilized due to a radio wave failure or the like, or other cases. In a case where a specific condition regarding the primary channel (first frequency band) is satisfied, it is sufficient if a heartbeat response including recommended operation parameters is transmitted.

The transmission unit 34 transmits the heartbeat response generated by the processing unit 33 to the communication device 110 (S102 in Fig. 8).

The reception unit 11 of the communication device 110 receives the heartbeat response transmitted from the communication control device 130 (S102 in Fig. 8). The reception unit 11 provides the received heartbeat response for the processing unit 13.

The processing unit 13 of the communication device 110 stops the radio wave transmission related to the grant within a fixed time (for example, within 60 seconds) after the reception of the heartbeat response, on the basis of the response code included in the heartbeat response. Furthermore, the processing unit 13 generates a grant temporal modification request on the basis of the recommended operation parameters included in the heartbeat response.

The grant temporal modification request includes at least an original grant ID and an ID (CBSD ID) of the communication device 110 for one or more grants for which setting is newly requested. The original grant ID is an ID of the grant for which the recommended operation parameters are notified in the heartbeat response. In other words, the original grant ID is a grant for which an instruction on a temporal stop of radio wave transmission has been given. The original grant ID is maintained as an ID of the grant(s) for which setting is newly requested. The grant temporal modification request corresponds to request information that requests a change in the frequency band utilization of which is permitted with the grant ID (permission identifier) from the primary channel (first frequency band) to the backup channel (second frequency band).

The transmission unit 14 transmits the grant temporal modification request generated by the processing unit 13 to the communication control device 130 (S103 in Fig. 8).

Although the communication device 110 has generated and transmitted the grant temporal modification request, a domain proxy (DP) that substitutes to perform the processing of the communication device 110 may generate and transmit the grant temporal modification request. In this case, the communication device 110 may transfer the heartbeat response to the domain proxy, or the communication control device 130 may transmit the heartbeat response to the domain proxy. In the following description, a case where the communication device 110 generates and transmits the grant temporal modification request will be assumed, but in a case where the grant temporal modification request is generated and transmitted by a domain proxy, terms may be appropriately substituted and read.

The reception unit 31 of the communication control device 130 receives the grant temporal modification request from the communication device 110 (S103 in Fig. 8). The reception unit 31 provides the received grant temporal modification request for the processing unit 33. The processing unit 33 performs grant temporal modification processing on the basis of the grant temporal modification request.

In the grant temporal modification processing, first, the following is verified.

· Whether the ID of the communication device 110 is valid
· Whether the grant ID is valid
· Whether the grant ID is the ID of the grant for which notification of the recommended operation parameters have been provided immediately before

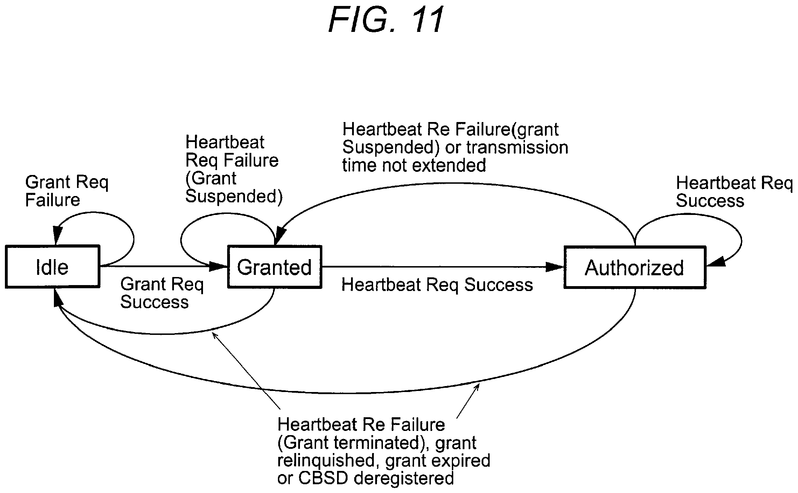

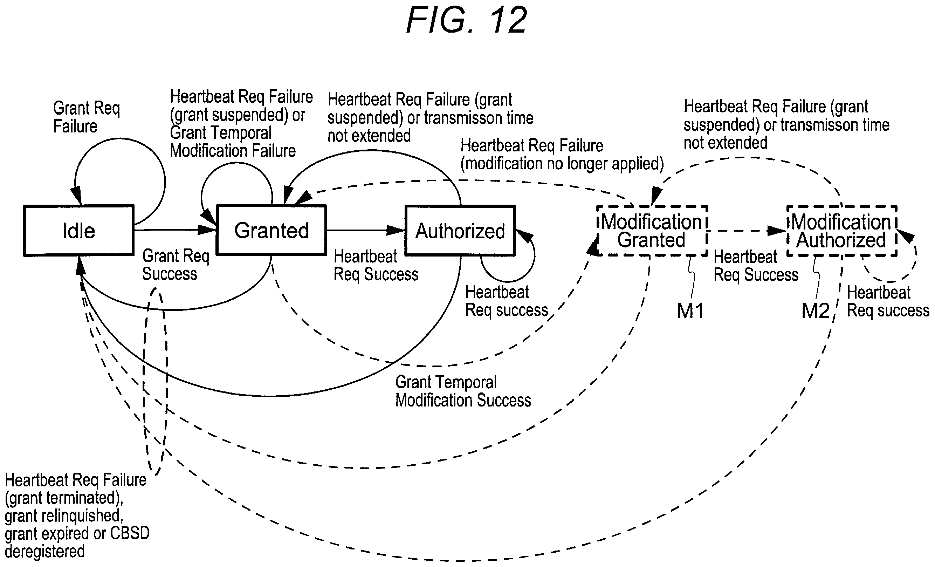

When these pieces of verification are passed, the processing unit 33 generates a grant temporal modification response that is a response to the grant temporal modification request. The grant temporal modification response may include information representing success or failure of the grant temporal modification request. In a case where the success information is included, radio wave transmission of the backup channel may be temporarily stopped for the communication device 110 (see "Granted" in Fig. 11 or "Modification Granted" in Fig. 12 to be described later), similarly to the case of the response code "501" of the heartbeat. In this case, the backup channel may made available in a case where the communication device 110 is permitted to utilize the backup channel in the heartbeat procedure (see "Granted" in Fig. 11 or "Modification Authorized" in Fig. 12 to be described later). Alternatively, when the grand temporal modification response including the success information is received, the communication device 110 may be brought into a state capable of radio wave transmission of the backup channel. The grant temporal modification response corresponds to permission information that permits a change in the frequency band utilization of which is permitted with the grand ID (permission identifier) from the primary channel (first frequency band) to the backup channel (second frequency band).

The processing unit 33 treats the recommended operation parameters as temporal operation parameters of a grant associated with the grant ID. The grant for which the temporal operation parameters are set is referred to as a "temporal grant" for convenience. The ID of the temporal grant is the same as the original grant ID. The temporal grant is included in a DPA move list regarding a channel (backup channel) associated with the recommended operation parameters.

The transmission unit 34 transmits the grant temporal modification response generated by the processing unit 33 to the communication device 110 (S104 in Fig. 8).

The reception unit 11 of the communication device 110 receives the grant temporal modification response transmitted from the communication control device 130 (S104 in Fig. 8). The reception unit 11 provides the received grant temporal modification response for the processing unit 13.

When acquiring the grant temporal modification response, the processing unit 13 of the communication device 110 instructs the control unit 15 to perform radio wave transmission on the basis of the recommended operation parameters designated with the heartbeat response. The control unit 15 controls the transmission unit 14 on the basis of the channel (backup channel) designated with the recommended operation parameters. Whether or not to continue radio wave transmission through the backup channel is managed on the basis of the heartbeat procedure similarly as the above. As described above, in a case where the grant temporal modification response is the success, radio wave transmission of the backup channel may be temporarily stopped, and the backup channel may be utilized (radio wave transmission may be started) in a case where the communication device 110 is permitted through the heartbeat procedure to utilize the backup channel. Alternatively, there may be a form in which radio wave transmission through the backup channel is started when the grand temporal modification response including the success information is received. In the following description, the former case (radio wave transmission is temporarily stopped, and the radio wave transmission is started in a case where the permission is given in the heartbeat procedure) is assumed.

When the radio wave utilization by the radar system is no longer detected (S105 in Fig. 8), the detection unit 37 of the communication control device 130 notifies the determination unit 32 of non-detection information. When acquiring the non-detection information, the determination unit 32 recognizes that it is no longer necessary to protect the dynamic protection area (in other words, the DPA returns from ON to OFF). The determination unit 32 notifies the processing unit 33 that the DPA has returned from ON to OFF.

Then, when receiving a heartbeat request regarding the temporal grant from the communication device 110 via the reception unit 31 (S106 in Fig. 8), the processing unit 33 generates a heartbeat response including information that gives an instruction on return to the original primary channel. The heartbeat response may include 501 as a response code. Furthermore, the processing unit 33 removes the temporal grant from the DPA move list for the backup channel. Furthermore, all the GAA grants included in the DPA move list for the backup channel immediately before are deleted from the DPA move list. The heartbeat response corresponds to instruction information that returns the frequency band utilization of which is permitted with the grant ID (permission identifier) to the primary channel (first frequency band) in a case where a specific condition is no longer satisfied, such as the return of the DPA from ON to OFF.

The transmission unit 34 transmits the heartbeat response generated by the processing unit 33 to the communication device 110 (S107 in Fig. 8).

The reception unit 11 of the communication device 110 receives the heartbeat response transmitted from the communication control device 130 (S107 in Fig. 8), and provides the received heartbeat response for the processing unit 13. The processing unit 13 instructs the control unit 15 to return the operating channel from the backup channel to the primary channel according to the instructions of the heartbeat response. Note that the grant ID is not changed. The control unit 15 controls the transmission unit 14 on the basis of the primary channel. Whether or not to continue radio wave transmission through the primary channel is managed on the basis of the heartbeat procedure similarly as the above. After the return to the primary channel, radio wave transmission is temporarily stopped, and then radio wave transmission through the primary channel is started in a case of permission in a heartbeat procedure.

Not according to the invention as defined in the claims:

Note that the communication device 110 may not perform the procedure according to the present exemplary embodiment when receiving a heartbeat response including recommended operation parameters from the communication control device 130 in sequence S102 in Fig. 8. That is, when receiving a heartbeat response including recommended operation parameters, the communication device 110 may selectively operate according to the recommended operation parameters, wait for the cancellation of a temporal stop of radio wave transmission of the current PAL grant, or newly transmit a grant request.

The above-described grant temporal modification procedure is desirably performed in a 3,550 to 3,600 MHz band as an example. The reason is that systems that need a different interference protection method (incumbent protection method) exist in a 3,600 to 3,700 MHz band. Specifically, the systems are satellite base stations (fixed satellite service). For the radar system described above, the radar system can be protected by including grants in the DPA move list. However, in order to protect the satellite base station, interference calculation for interference to be equal to or less than a fixed level (that is, calculation of transmission power that does not exceed an interference margin (interference margin allocation)) is necessary. Therefore, even in a case where the primary channel is switched to the backup channel, it takes time to calculate the interference of the backup channel, and it takes time to start the radio wave transmission.

Therefore, the present exemplary embodiment is particularly effective in a case where the grant temporal modification procedure is performed for a frequency band (3,550 to 3,600 MHz band) in which only systems that do not need interference calculation exist. However, even in a frequency band in which only systems that need interference calculation exist, it is also possible to perform a temporal modification procedure using a band of CPAS as a backup channel in a period between the CPAS. However, it is necessary that an interference margin of the frequency band in question remains.

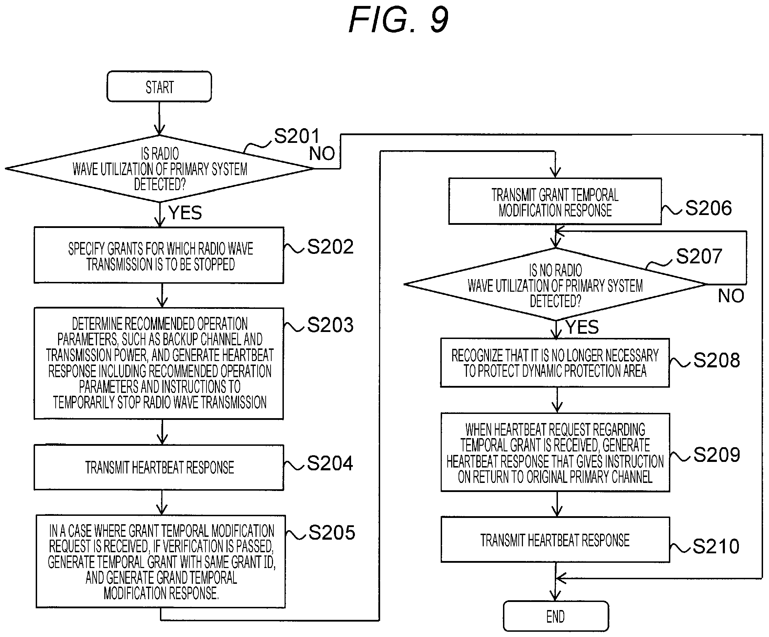

Fig. 9 is a flowchart illustrating an example of operation of the communication control device 130 according to the present exemplary embodiment. The determination unit 32 determines whether a sensing unit 38 of the communication control device 130 detects radio wave utilization by a primary system (radar system or the like) (S201). In a case where the radio wave utilization is detected by the determination unit 32, grants for which radio wave transmission is to be stopped are specified (S202). For example, in a case where a DPA move list exists, grants included in the list are specified among PAL grants set for communication devices 110. Information about the specified grants is stored in the storage unit 36.

In a case where a heartbeat request is received from a communication device 110 and a grant related to the heartbeat request is a PAL grant for which radio wave transmission is to be stopped, the processing unit 33 selects a backup channel set for the PAL grant (S203). For example, the transmission power of the selected back channel is determined to be the current maximum EIRP or EIRP within the range not exceeding an interference margin (same S203). A heartbeat response including recommended operation parameters representing the selected backup channel and the determined transmission power, and a response code is generated (same S203). The response code is, for example, 501 (SUSPENDED_GRANT, that is, a temporal stop of radio wave transmission).

The transmission unit 34 transmits the heartbeat response generated by the processing unit 33 to the communication device 110 (S204).

In a case where the reception unit 31 receives a grant temporal modification request from the communication device, the processing unit 33 performs grant temporal modification processing on the basis of the grant temporal modification request (S205). That is, the processing unit 33 verifies whether the ID of the communication device 110 is valid, the grant ID is valid, and the grant ID is the ID of a grant for which notification of recommended operation parameters have been provided immediately before. When these pieces of verification are passed, the processing unit 33 uses the recommended operation parameters as operation parameters of a temporal grant associated with the grant ID, and sets the temporal grant. The processing unit 33 generates a grant temporal modification response that is a response to the temporal modification request (same S205). The grant temporal modification response includes the ID of the temporal grant, and the value of the ID of the temporal grant is the same as the value of the original grant ID.

The transmission unit 34 transmits the grant temporal modification response generated by the processing unit 33 to the communication device 110 (S206).

In a case where the sensing unit 38 no longer detects radio wave utilization by the primary system (radar system or the like) (S207), the determination unit 32 recognizes that it is no longer necessary to protect the dynamic protection area (in other words, the DPA returns from ON to OFF) (S208).

When the reception unit 31 receives a heartbeat request regarding the temporal grant from the communication device 110, the processing unit 33 generates a heartbeat response including information that gives an instruction on return to the original primary channel (S209).

The transmission unit 34 transmits the heartbeat response generated by the processing unit 33 to the communication device 110 (S210).

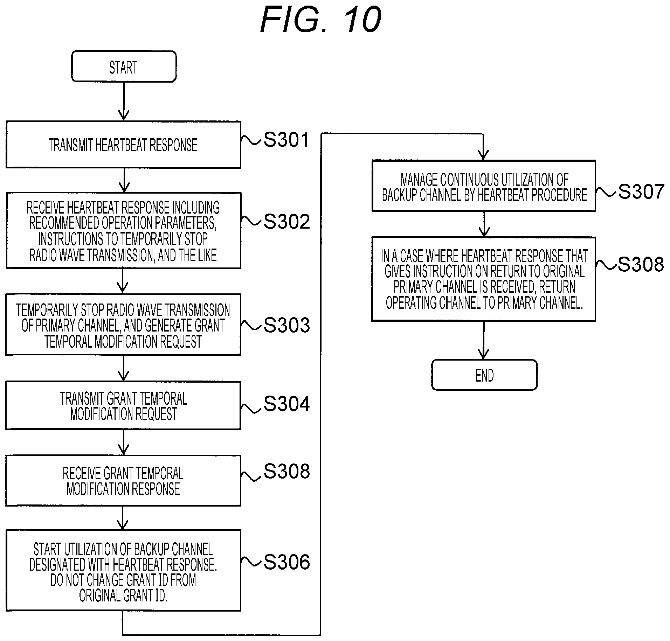

Fig. 10 is a flowchart illustrating an example of operation of the communication device 110 according to the present exemplary embodiment.

The transmission unit 14 of the communication device 110 transmits a heartbeat response based on a PAL grant to the communication control device 130 (S301). The reception unit 11 receives a heartbeat response including recommended operation parameters and instructions to temporarily stop radio wave transmission (response code) from the communication control device 130 (S302).

The control unit 35 of the communication device 110 stops radio wave transmission of a primary channel related to the PAL grant on the basis of the response code included in the heartbeat response. Furthermore, the processing unit 33 generates a grant temporal modification request on the basis of the recommended operation parameters included in the heartbeat response (S303). The grant temporal modification request includes at least an original grant ID and the ID (CBSD ID) of the communication device 110, for one or more grants for which setting is newly requested.

The transmission unit 14 transmits the grant temporal modification request generated by the processing unit 13 to the communication control device 130 (S304).

The reception unit 11 receives a grant temporal modification response transmitted from the communication control device 130 (S305). The processing unit 13 instructs the control unit 15 to utilize a backup channel on the basis of the recommended operation parameters designated with the heartbeat response (S306). The control unit 15 controls radio wave transmission of the transmission unit 14 on the basis of the backup channel an instruction on which is given (same S306). Whether or not to continue radio wave transmission through the backup channel is managed on the basis of the heartbeat procedure similarly as the above (S307).

In a case where the reception unit 11 of the communication device 110 receives a heartbeat response including information that gives an instruction on return to the original primary channel, the processing unit 13 instructs the control unit 15 to return the operating channel from the backup channel to the primary channel (S308). The control unit 15 controls radio wave transmission of the transmission unit 14 based on the primary channel (S308). The control unit 15 stops radio wave transmission through the backup channel.

As described above, according to the present exemplary embodiment, when radio wave utilization by a radar system is recognized, recommended operation parameters (a recommended backup channel, transmission power, and the like) and a response code (for example, "SUSPENDED_GRANT") giving an instruction on a stop of radio wave transmission are included in a heartbeat response transmitted in a heartbeat procedure. Therefore, the communication device 110 is instructed to temporarily stop radio wave transmission for a grant using the same frequency band as the frequency band of the radar system. In a case where a request for a new grant using the recommended operation parameters (grant temporal modification request) is received from the communication device that has acquired the recommended operation parameters, a response allowing the utilization of the recommended operation parameters (grant temporal modification response) is transmitted. Therefore, it is possible to switch the operating channel from a primary channel to a backup channel at an early stage while maintaining the PAL grant ID.

(First Modification: Feature Capability Exchange)

A communication control device (SAS) and a communication device (CBSD) that do not correspond to the function of the grant temporal modification procedure described above may exist in a communication network. For example, it is described in Non-Patent Document 1 that all functions are basically treated as optional after Release 2 of the CBRS standards of the Wireless Innovation Forum (WInnForum). Therefore, it is desirable that the communication control device and the communication device exchange whether or not the communication control device and the communication device have the capabilities corresponding to the present function, so that the communication control device and the communication device can grasp each other's capabilities. Specifically, for example, the communication control device 130 and the communication device 110 notify each other of capability information or an identifier indicating whether the function of the grant temporal modification procedure is corresponded to, in at least the registration procedure described in <2.1>. The capability information may be similarly exchanged between the communication control devices 130. If the communication device 110 does not correspond to the present function, the communication control device 130 does not execute a grant temporal modification procedure for the communication device 110 in question. Similarly, the communication device 110 can grasp in advance that the communication control device 130 cannot execute a grant temporal modification procedure if the communication control device 130 does not correspond to the present function.

(Second Modification: Grant State Machine Enhancement)

As described above, by the grant temporal modification procedure according to the present exemplary embodiment, the communication control device 130 can perform temporal frequency avoidance for the purpose of protecting a radar system without changing a grant ID given to the communication device 110. That is, the communication device 110 can change the operating channel from a primary channel to a backup channel without transmitting a re-request for a grant.

The present second modification shows a form in which the above-described grant temporal modification procedure is reflected in a grant state machine defined in WINNF-TS-0016. At this time, the operation of a CBSD and a SAS that are designed on the basis of the grant state machine and do not have the function of the present procedure is prevented from being influenced, and the related incumbent test specifications are prevented from being influenced.

Fig. 11 illustrates the grant state machine as defined in WINNF-TS-0016. Fig. 11 is an excerpt from Non-Patent Document 5.

Fig. 12 illustrates an example of a grant state machine according to the present second modification. In the grant state machine in Fig. 12, no change is made to the grant state machine in Fig. 11, and two states M1 and M2 are newly added. The state M1 is "Modification Granted", and the state M2 is "Modification Authorized". Transitions between the states M1 and M2 and transitions between incumbent states and the added states M1 and M2 are added. The grant state machine is managed by at least one of the control unit 35 of the communication control device 130 or the communication device 15.

A new transition condition "Grant Temporal Modification Success" in which transition from an incumbent state "Granted State" to the new state M1 is made is added. For example, in a case where the communication device 110 temporarily stops radio wave transmission of a primary channel with a heartbeat response transmitted in sequence S102 in Fig. 8, the communication device 110 becomes in "Granted State". When in this state of "Granted State", a grant temporal modification request is transmitted and a grant temporal modification response of the success is received, a transition condition of "Grant Temporal Modification Success" is satisfied, and a transition to the state M1 ("Modification Granted") is made. Communication control devices (SASs) and communication devices (CBSDs) that do not correspond to the function of the procedure of the present exemplary embodiment do not need to implement this transition.

When in the state M1, utilization of a backup channel is permitted in a heartbeat procedure, a transition to the state M2 ("Modification Authorized") is made. In a case where in the state M2, utilization of the backup channel is not permitted in a heartbeat procedure, or in a case where an effective period has passed, a transition condition of "Heartbeat Req Failure (grant suspended) or transmission time not extended" is satisfied, and a return to the state M1 is made. When in the state M1, a heartbeat request that makes a return to the original primary channel is transmitted in sequence S106 in Fig. 8, a return to "Granted" is made. In a case where in the state M2, there is a grant cancellation, a grant abandonment, an effective period lapse, a cancellation of the registration of the communication device 110 (CBSD), or the like in a heartbeat procedure, a transition to "Idle" is made.

A condition "Grant Temporal Modification Failure" in which a transition from the incumbent state "Granted State" to another state is not made is added. For example, when the communication device 110 temporarily stops radio wave transmission through the primary channel with a heartbeat response transmitted in sequence S102 in Fig. 8, the communication device 110 becomes in "Granted State". When in this state of "Granted State", a grant temporal modification request is transmitted and a grant temporal modification response of the failure is received, the transition condition of "Grant Temporal Modification Failure" is satisfied, and the same state "Granted State" is maintained. Communication control devices (SASs) and communication devices (CBSDs) that do not correspond to the function of the procedure of the present exemplary embodiment do not need to implement this transition.

Therefore, in the grant state machine in Fig. 12, the incumbent transition conditions are not changed. Only the transition conditions associated with the newly introduced grant temporal modification procedure according to the present exemplary embodiment are added. Only communication control devices and communication devices corresponding to the function of the procedure of the present exemplary embodiment are required to implement these transition conditions.

By using the enhanced grant state machine illustrated in Fig. 12 in this manner, the problem of backward compatibility due to the introduction of the temporal modification procedure according to the present exemplary embodiment does not occur.

Note that the above-described exemplary embodiments illustrate an example for embodying the present disclosure, and the present disclosure can be implemented in other various forms.

Furthermore, the effects of the present disclosure described in the present description are merely examples, and there may also be other effects.

REFERENCE SIGNS LIST

31 Reception unit
32 Determination unit
33 Processing unit
34 Transmission unit
35 Control unit
36 Storage unit
37 Detection unit
11 Reception unit

13 Processing unit
14 Transmission unit
15 Control unit
16 Storage unit
100 Communication network
110, 110A, 110B, 110C Communication device
120 Terminal
130, 130A, 130B Communication control device
100 Communication network
110, 110A, 110B, 110C Communication device
120 Terminal
130, 130A, 130B Communication control device

**Claims**

1. A communication control device (130) comprising:

   a first transmission unit (34) that is configured to transmit recommendation information that recommends a second frequency band as a change destination of a first frequency band utilized by a communication device permitted with a permission identifier to utilize the first frequency band;
   a reception unit (31) that is configured to receive request information that requests a change in a frequency band utilization of which is permitted with the permission identifier from the first frequency band to the second frequency band; and
   a second transmission unit (34) that is configured to transmit, in a case where the request information includes the permission identifier, permission information that permits a change in the frequency band utilization of which is permitted with the permission identifier from the first frequency band to the second frequency band.

2. The communication control device according to claim 1, wherein
   the first transmission unit (34) is configured to transmit the recommendation information in a case where a specific condition regarding the first frequency band is satisfied.

3. The communication control device according to claim 2, wherein the first transmission unit (34) is configured to transmit the recommendation information in a case where utilization of the first frequency band by a system that can preferentially utilize the first frequency band is detected as the specific condition.

4. The communication control device according to claim 3, wherein
   the first transmission unit (34) is configured to transmit the recommendation information in a case where the permission identifier of the communication device is included in a list that stores a permission identifier for which radio wave transmission is stopped in a case where utilization of the first frequency band by the system is detected.

5. The communication control device according to claim 1, wherein
   the recommendation information includes information about transmission power used in the second frequency band.

6. The communication control device according to claim 1, wherein

   the reception unit (31) is configured to receive a frequency utilization notification regarding the first frequency band from the communication device at regular intervals, and
   the first transmission unit (34) is configured to transmit a response including the recommendation information to the communication device in response to the frequency utilization notification.

7. The communication control device according to claim 1, wherein
   the second frequency band is a frequency band for backup of the first frequency band.

8. The communication control device according to claim 2, wherein
   the second transmission unit (34) is configured to transmit, in a case where the specific condition is no longer satisfied, instruction information that returns the frequency band utilization of which is permitted with the permission identifier to the first frequency band.

9. The communication control device according to claim 5, further comprising

a processing unit (33) that is configured to reckon transmission power at which an interference amount in the second frequency band does not exceed the interference margin, wherein
the recommendation information includes information that designates the reckoned transmission power as transmission power to be used in the second frequency band.

10. The communication control device according to claim 5, wherein
the recommendation information causes transmission power same as the transmission power used by the communication device in the first frequency band to be transmission power to be used in the second frequency band.

11. A communication control method comprising:

transmitting recommendation information that recommends a second frequency band as a change destination of a first frequency band utilized by a communication device permitted with a permission identifier to utilize the first frequency band;
receiving request information that requests a change in a frequency band utilization of which is permitted with the permission identifier from the first frequency band to the second frequency band; and
in a case where the request information includes the permission identifier, transmitting permission information that permits a change in the frequency band utilization of which is permitted with the permission identifier from the first frequency band to the second frequency band.

12. A communication device (110) comprising:

a reception unit (11) that is configured to receive recommendation information that recommends a second frequency band as a change destination of a first frequency band utilized by the communication device permitted with a permission identifier to utilize the first frequency band;
a transmission unit (14) that is configured to transmit, in a case where the recommendation information is received, request information that includes the permission identifier and requests a change in a frequency band utilization of which is permitted with the permission identifier from the first frequency band to the second frequency band; and
a second reception unit (11) that is configured to receive permission information that permits a change in the frequency band utilization of which is permitted with the permission identifier from the first frequency band to the second frequency band.

13. A communication method executed by a communication device permitted with a permission identifier to utilize a first frequency band, the communication method comprising:

receiving recommendation information that recommends a second frequency band as a change destination of the first frequency band;
in a case where the recommendation information is received, transmitting request information that includes the permission identifier and requests a change in a frequency band utilization of which is permitted with the permission identifier from the first frequency band to the second frequency band; and
receiving permission information that permits a change in the frequency band utilization of which is permitted with the permission identifier from the first frequency band to the second frequency band.

**Patentansprüche**

1. Kommunikationssteuervorrichtung (130), umfassend:

eine erste Übertragungseinheit (34), die konfiguriert ist, um Empfehlungsinformationen zu übertragen, die ein zweites Frequenzband als ein Wechselziel eines ersten Frequenzbands empfehlen, das durch eine Kommunikationsvorrichtung genutzt wird, die mit einer Berechtigungskennung berechtigt ist, das erste Frequenzband zu nutzen;
eine Empfangseinheit (31), die konfiguriert ist, um Anforderungsinformationen zu empfangen, die einen Wechsel in einer Frequenzbandnutzung, die mit der Berechtigungskennung berechtigt ist, von dem ersten Frequenzband zu dem zweiten Frequenzband anfordern; und

34

eine zweite Übertragungseinheit (34), die konfiguriert ist, um, in einem Fall, in dem die Anforderungsinformationen die Berechtigungskennung einschließen, Berechtigungsinformationen zu übertragen, die einen Wechsel in der Frequenzbandnutzung, die mit der Berechtigungskennung berechtigt ist, von dem ersten Frequenzband zu dem zweiten Frequenzband berechtigen.

2. Kommunikationssteuervorrichtung nach Anspruch 1, wobei
die erste Übertragungseinheit (34) konfiguriert ist, um die Empfehlungsinformationen in einem Fall zu übertragen, in dem eine bestimmte Bedingung bezüglich des ersten Frequenzbands erfüllt ist.

3. Kommunikationssteuervorrichtung nach Anspruch 2, wobei die erste Übertragungseinheit (34) konfiguriert ist, um die Empfehlungsinformationen in einem Fall zu übertragen, in dem die Nutzung des ersten Frequenzbands durch ein System, das das erste Frequenzband vorzugsweise nutzen kann, als die bestimmte Bedingung erfasst wird.

4. Kommunikationssteuervorrichtung nach Anspruch 3, wobei
die erste Übertragungseinheit (34) konfiguriert ist, um die Empfehlungsinformationen in einem Fall zu übertragen, in dem die Berechtigungskennung der Kommunikationsvorrichtung in einer Liste eingeschlossen ist, die eine Berechtigungskennung speichert, für die Funkwellenübertragung in einem Fall gestoppt wird, in dem eine Nutzung des ersten Frequenzbands durch das System erfasst wird.

5. Kommunikationssteuervorrichtung nach Anspruch 1, wobei
die Empfehlungsinformationen Informationen über eine Übertragungsleistung einschließt, die in dem zweiten Frequenzband verwendet wird.

6. Kommunikationssteuervorrichtung nach Anspruch 1, wobei

die Empfangseinheit (31) konfiguriert ist, um in regelmäßigen Abständen eine Frequenznutzungsbenachrichtigung bezüglich des ersten Frequenzbandes von der Kommunikationsvorrichtung zu empfangen, und
die erste Übertragungseinheit (34) konfiguriert ist, um eine Antwort, die die Empfehlungsinformationen einschließt, als Reaktion auf die Frequenznutzungsbenachrichtigung an die Kommunikationsvorrichtung zu übertragen.

7. Kommunikationssteuervorrichtung nach Anspruch 1, wobei
das zweite Frequenzband ein Frequenzband für eine Sicherung des ersten Frequenzbands ist.

8. Kommunikationssteuervorrichtung nach Anspruch 2, wobei
die zweite Übertragungseinheit (34) konfiguriert ist, um in einem Fall, in dem die bestimmte Bedingung nicht länger erfüllt wird, Anweisungsinformationen zu übertragen, die die Frequenzbandnutzung, die mit der Erlaubniskennung berechtigt ist, auf das erste Frequenzband zurückführt.

9. Kommunikationssteuervorrichtung nach Anspruch 5, ferner umfassend

eine Verarbeitungseinheit (33), die konfiguriert ist, um eine Übertragungsleistung zu berechnen, bei der ein Interferenzbetrag in dem zweiten Frequenzband den Interferenzspielraum nicht überschreitet, wobei
die Empfehlungsinformationen Informationen einschließen, die die berechnete Übertragungsleistung als Übertragungsleistung festlegen, die in dem zweiten Frequenzband zu verwenden ist.

10. Kommunikationssteuervorrichtung nach Anspruch 5, wobei
die Empfehlungsinformationen bewirken, dass die Übertragungsleistung, die die gleiche Übertragungsleistung ist, die durch die Kommunikationsvorrichtung in dem ersten Frequenzband verwendet wird, die Übertragungsleistung ist, die in dem zweiten Frequenzband zu verwenden ist.

11. Kommunikationssteuerungsverfahren, umfassend:

Übertragen von Empfehlungsinformationen, die ein zweites Frequenzband als ein Wechselziel eines ersten Frequenzbands empfehlen, das durch eine Kommunikationsvorrichtung genutzt wird, die mit einer Berechtigungskennung berechtigt ist, das erste Frequenzband zu nutzen;
Empfangen von Anforderungsinformationen, die einen Wechsel in einer Frequenzbandnutzung, die mit der Berechtigungskennung berechtigt ist, von dem ersten Frequenzband zu dem zweiten Frequenzband anfordern;

und

in einem Fall, in dem die Anforderungsinformationen die Berechtigungskennung umfassen, Übermitteln von Berechtigungsinformationen, die einen Wechsel in der Frequenzbandnutzung, die mit der Berechtigungskennung berechtigt ist, von dem ersten Frequenzband zu dem zweiten Frequenzband berechtigen.

12. Kommunikationsvorrichtung (110), umfassend:

eine Empfangseinheit (11), die konfiguriert ist, um Empfehlungsinformationen zu empfangen, die ein zweites Frequenzband als ein Wechselziel eines ersten Frequenzbands empfehlen, das durch eine Kommunikationsvorrichtung genutzt wird, die mit einer Berechtigungskennung berechtigt ist, das erste Frequenzband zu nutzen;
eine Übertragungseinheit (14), die konfiguriert ist, um in einem Fall, in dem die Empfehlungsinformationen empfangen werden, Anforderungsinformationen zu übertragen, die die Berechtigungskennung einschließen und einen Wechsel in einer Frequenzbandnutzung, die mit der Berechtigungskennung berechtigt ist, von dem ersten Frequenzband zu dem zweiten Frequenzband anfordern; und
eine zweite Empfangseinheit (11), die konfiguriert ist, um Berechtigungsinformationen zu empfangen, die einen Wechsel in der Frequenzbandnutzung, die mit der Berechtigungskennung berechtigt ist, von dem ersten Frequenzband zu dem zweiten Frequenzband berechtigen.

13. Kommunikationsverfahren, das durch eine Kommunikationsvorrichtung ausgeführt wird, die mit einer Berechtigungskennung berechtigt ist, das erste Frequenzband zu nutzen, das Kommunikationsverfahren umfassend:

Empfangen von Empfehlungsinformationen, die ein zweites Frequenzband als ein Wechselziel des ersten Frequenzbandes empfehlen;
in einem Fall, in dem die Empfehlungsinformationen empfangen werden, Übertragen von Anforderungsinformationen, die die Berechtigungskennung einschließen und einen Wechsel in einer Frequenzbandnutzung, die mit der Berechtigungskennung berechtigt ist, von dem ersten Frequenzband zu dem zweiten Frequenzband anfordern; und
Empfangen von Berechtigungsinformationen, die einen Wechsel in der Frequenzbandnutzung, die mit der Berechtigungskennung berechtigt ist, von dem ersten Frequenzband zu dem zweiten Frequenzband berechtigen.

**Revendications**

1. Dispositif de commande de communication (130), comprenant :

une première unité de transmission (34) configurée pour transmettre des informations de recommandation qui recommandent une seconde bande de fréquences comme destination de changement d'une première bande de fréquences utilisée par un dispositif de communication autorisé avec un identificateur d'autorisation à utiliser la première bande de fréquences ;
une unité de réception (31) configurée pour recevoir des informations de demande de modification d'une bande de fréquences dont l'utilisation est autorisée par l'identificateur d'autorisation, de la première bande de fréquences à la seconde bande de fréquences ; et
une seconde unité de transmission (34) configurée pour transmettre, dans le cas où les informations de demande comportent l'identificateur d'autorisation, des informations d'autorisation qui permettent un changement dans la bande de fréquences dont l'utilisation est autorisée avec l'identificateur d'autorisation, de la première bande de fréquences à la seconde bande de fréquences.

2. Dispositif de commande de communication selon la revendication 1, dans lequel
la première unité de transmission (34) est configurée pour transmettre les informations de recommandation lorsqu'une condition spécifique concernant la première bande de fréquences est remplie.

3. Dispositif de commande de communication selon la revendication 2, dans lequel la première unité de transmission (34) est configurée pour transmettre les informations de recommandation dans le cas où l'utilisation de la première bande de fréquences par un système qui peut utiliser préférentiellement la première bande de fréquences est détectée comme étant la condition spécifique.

4. Dispositif de commande de communication selon la revendication 3, dans lequel

la première unité de transmission (34) est configurée pour transmettre les informations de recommandation dans le cas où l'identificateur d'autorisation du dispositif de communication est inclus dans une liste qui stocke un identificateur d'autorisation pour lequel la transmission d'ondes radio est arrêtée dans le cas où l'utilisation de la première bande de fréquences par le système est détectée.

5. Dispositif de commande de communication selon la revendication 1, dans lequel
les informations de recommandation comportent des informations sur la puissance de transmission utilisée dans la seconde bande de fréquences.

6. Dispositif de commande de communication selon la revendication 1, dans lequel

l'unité de réception (31) est configurée pour recevoir à intervalles réguliers une notification d'utilisation de fréquence concernant la première bande de fréquences de la part du dispositif de communication, et
la première unité de transmission (34) est configurée pour transmettre une réponse comportant les informations de recommandation au dispositif de communication en réponse à la notification d'utilisation de la fréquence.

7. Dispositif de commande de communication selon la revendication 1, dans lequel
la seconde bande de fréquences est une bande de fréquences pour la sauvegarde de la première bande de fréquences.

8. Dispositif de commande de communication selon la revendication 2, dans lequel
la seconde unité de transmission (34) est configurée pour transmettre, dans le cas où la condition spécifique n'est plus remplie, des informations d'instruction qui renvoient la bande de fréquences dont l'utilisation est autorisée avec l'identificateur d'autorisation à la première bande de fréquences.

9. Dispositif de commande de communication selon la revendication 5, comprenant en outre

une unité de traitement (33) configurée pour calculer la puissance de transmission à laquelle une quantité de brouillage dans la seconde bande de fréquences ne dépasse pas la marge de brouillage, dans laquelle
les informations de recommandation comportent des informations qui désignent la puissance de transmission calculée comme puissance de transmission à utiliser dans la seconde bande de fréquences.

10. Dispositif de commande de communication selon la revendication 5, dans lequel
les informations de recommandation font en sorte que la puissance de transmission utilisée par le dispositif de communication dans la première bande de fréquences soit la puissance de transmission à utiliser dans la seconde bande de fréquences.

11. Procédé de commande de communication, comprenant :

la transmission des informations de recommandation qui recommandent une seconde bande de fréquences comme destination de changement d'une première bande de fréquences utilisée par un dispositif de communication autorisé avec un identificateur d'autorisation à utiliser la première bande de fréquences ;
la réception des informations de demande qui demandent un changement dans une bande de fréquences dont l'utilisation est autorisée avec l'identificateur d'autorisation, de la première bande de fréquences à la seconde bande de fréquences ; et
dans le cas où les informations de demande comportent l'identificateur d'autorisation, la transmission des informations d'autorisation qui permettent un changement dans la bande de fréquences dont l'utilisation est autorisée avec l'identificateur d'autorisation, de la première bande de fréquences à la seconde bande de fréquences.

12. Dispositif de communication (110) comprenant :

une unité de réception (11) configurée pour recevoir des informations de recommandation qui recommandent une seconde bande de fréquences comme destination de changement d'une première bande de fréquences utilisée par le dispositif de communication autorisé avec un identificateur d'autorisation à utiliser la première bande de fréquences ;
une unité de transmission (14) configurée pour transmettre, dans le cas où l'information de recommandation est reçue, une information de demande qui comporte l'identificateur d'autorisation et demande un changement dans une bande de fréquences dont l'utilisation est autorisée avec l'identificateur d'autorisation, de la première bande de fréquences à la seconde bande de fréquences ; et

une seconde unité de réception (11) configurée pour recevoir des informations d'autorisation permettant de modifier la bande de fréquences dont l'utilisation est autorisée par l'identificateur d'autorisation, de la première bande de fréquences à la seconde bande de fréquences.

13. Procédé de communication exécuté par un dispositif de communication autorisé avec un identificateur d'autorisation à utiliser une première bande de fréquence, le procédé de communication comprenant :

la réception des informations de recommandation qui recommandent une seconde bande de fréquences comme destination de changement de la première bande de fréquences ;

dans le cas où l'information de recommandation est reçue, la transmission d'une information de demande qui comporte l'identificateur d'autorisation et demande un changement dans une bande de fréquences dont l'utilisation est autorisée avec l'identificateur d'autorisation, de la première bande de fréquences à la seconde bande de fréquences ; et

la réception des informations d'autorisation permettant de modifier la bande de fréquences dont l'utilisation est autorisée par l'identificateur d'autorisation, de la première bande de fréquences à la seconde bande de fréquences.

FIG. 1

EP 4 132 054 B1

*FIG. 2*

FIG. 3

EP 4 132 054 B1

# FIG. 4

EP 4 132 054 B1

FIG. 5

## FIG. 6

120  120  110  130

T101 CALCULATE COMMUNICATION PARAMETERS TO BE USED BY COMMUNICATION DEVICES OF SECONDARY SYSTEM

T103 ACQUIRE COMMUNICATION PARAMETERS TO BE USED BY COMMUNICATION DEVICES (BASE STATION AND TERMINALS) TO BE USED BY SECONDARY SYSTEM

T102 NOTIFY COMMUNICATION DEVICES OF SECONDARY SYSTEM OF COMMUNICATION PARAMETERS

T104 SET COMMUNICATION PARAMETERS TO BE USED BY COMMUNICATION DEVICE (BASE STATION) ITSELF

T106 ACQUIRE COMMUNICATION PARAMETERS TO BE USED BY COMMUNICATION DEVICE (TERMINAL) OF SECONDARY SYSTEM

T106 ACQUIRE COMMUNICATION PARAMETERS TO BE USED BY COMMUNICATION DEVICE (TERMINAL) OF SECONDARY SYSTEM

T105 MAKE NOTIFICATION OF COMMUNICATION PARAMETERS TO BE USED BY TERMINALS UNDER CONTROL OF COMMUNICATION DEVICE (BASE STATION) ITSELF

T107 SET COMMUNICATION PARAMETERS TO BE USED BY COMMUNICATION DEVICE (TERMINAL) ITSELF

T107 SET COMMUNICATION PARAMETERS TO BE USED BY COMMUNICATION DEVICE (TERMINAL) ITSELF

T108 PERFORM COMMUNICATION WITH ANOTHER COMMUNICATION DEVICE (TERMINAL) OF SECONDARY SYSTEM

T108 PERFORM COMMUNICATION WITH ANOTHER COMMUNICATION DEVICE (TERMINAL) OF SECONDARY SYSTEM

# FIG. 7

# FIG. 8

COMMUNICATION DEVICE 110                    COMMUNICATION CONTROL DEVICE 130

HEARTBEAT REQUEST: S101

HEARTBEAT RESPONSE: S102

GRANT TEMPORAL MODIFICATION REQUEST: S103

GRANT TEMPORAL MODIFICATION RESPONSE: S104

S105

HEARTBEAT REQUEST: S106

HEARTBEAT RESPONSE: S107

# FIG. 9

START

S201 — IS RADIO WAVE UTILIZATION OF PRIMARY SYSTEM DETECTED?

YES

S202 — SPECIFY GRANTS FOR WHICH RADIO WAVE TRANSMISSION IS TO BE STOPPED

S203 — DETERMINE RECOMMENDED OPERATION PARAMETERS, SUCH AS BACKUP CHANNEL AND TRANSMISSION POWER, AND GENERATE HEARTBEAT RESPONSE INCLUDING RECOMMENDED OPERATION PARAMETERS AND INSTRUCTIONS TO TEMPORARILY STOP RADIO WAVE TRANSMISSION

S204 — TRANSMIT HEARTBEAT RESPONSE

S205 — IN A CASE WHERE GRANT TEMPORAL MODIFICATION REQUEST IS RECEIVED, IF VERIFICATION IS PASSED, GENERATE TEMPORAL GRANT WITH SAME GRANT ID, AND GENERATE GRAND TEMPORAL MODIFICATION RESPONSE.

NO

S206 — TRANSMIT GRANT TEMPORAL MODIFICATION RESPONSE

S207 — IS NO RADIO WAVE UTILIZATION OF PRIMARY SYSTEM DETECTED?

NO

YES

S208 — RECOGNIZE THAT IT IS NO LONGER NECESSARY TO PROTECT DYNAMIC PROTECTION AREA

S209 — WHEN HEARTBEAT REQUEST REGARDING TEMPORAL GRANT IS RECEIVED, GENERATE HEARTBEAT RESPONSE THAT GIVES INSTRUCTION ON RETURN TO ORIGINAL PRIMARY CHANNEL

S210 — TRANSMIT HEARTBEAT RESPONSE

END

# FIG. 10

START

↓

TRANSMIT HEARTBEAT RESPONSE — S301

↓

RECEIVE HEARTBEAT RESPONSE INCLUDING RECOMMENDED OPERATION PARAMETERS, INSTRUCTIONS TO TEMPORARILY STOP RADIO WAVE TRANSMISSION, AND THE LIKE — S302

↓

TEMPORARILY STOP RADIO WAVE TRANSMISSION OF PRIMARY CHANNEL, AND GENERATE GRANT TEMPORAL MODIFICATION REQUEST — S303

↓

TRANSMIT GRANT TEMPORAL MODIFICATION REQUEST — S304

↓

RECEIVE GRANT TEMPORAL MODIFICATION RESPONSE — S308

↓

START UTILIZATION OF BACKUP CHANNEL DESIGNATED WITH HEARTBEAT RESPONSE. DO NOT CHANGE GRANT ID FROM ORIGINAL GRANT ID. — S306

MANAGE CONTINUOUS UTILIZATION OF BACKUP CHANNEL BY HEARTBEAT PROCEDURE — S307

↓

IN A CASE WHERE HEARTBEAT RESPONSE THAT GIVES INSTRUCTION ON RETURN TO ORIGINAL PRIMARY CHANNEL IS RECEIVED, RETURN OPERATING CHANNEL TO PRIMARY CHANNEL. — S308

↓

END

EP 4 132 054 B1

# FIG. 11

EP 4 132 054 B1

## FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019187507 A1
- US 2019364565 A1

### Non-patent literature cited in the description

- WINNF-SSC-0004-V14.0.0 Spectrum Sharing Committee CBRS Release Plan
- Electronic Code of Federal Regulations. Citizens Broadband Radio Service
- Electronic Code of Federal Regulations. Subpart X Spectrum Leasing